Europäisches Patentamt

European Patent Office

Office européen des brevets

(19)

(11) **EP 1 549 097 A1**

(12) **EUROPEAN PATENT APPLICATION**
published in accordance with Art. 158(3) EPC

(43) Date of publication:
**29.06.2005 Bulletin 2005/26**

(51) Int Cl.⁷: **H04Q 7/38**

(21) Application number: **03705278.4**

(22) Date of filing: **18.02.2003**

(86) International application number:
**PCT/JP2003/001710**

(87) International publication number:
**WO 2004/075589 (02.09.2004 Gazette 2004/36)**

(84) Designated Contracting States:
**AT BE BG CH CY CZ DE DK EE ES FI FR GB GR
HU IE IT LI LU MC NL PT SE SI SK TR**
Designated Extension States:
**AL LT LV MK RO**

(71) Applicant: **FUJITSU LIMITED
Kawasaki-shi, Kanagawa 211-8588 (JP)**

(72) Inventors:
• **ODE, Takayoshi, c/o FUJITSU LIMITED
Kawasaki-shi, Kanagawa 211-8588 (JP)**

• **OTONARI, Junji, c/o FUJITSU LIMITED
Kawasaki-shi, Kanagawa 211-8588 (JP)**

(74) Representative: **Hitching, Peter Matthew et al
Haseltine Lake,
Imperial House,
15-19 Kingsway
London WC2B 6UD (GB)**

(54) **RADIO BASE STATION AND MOBILE COMMUNICATION SYSTEM**

(57)    For the achievement of a radio base station and a mobile communication system wherein the transmission time of retransmission data or ordinary data at handover time is shortened, thereby securing a transmission assignment time, the radio base station is composed of a buffer holding communication data to a terminal, an extractor extracting a communication request signal from a received signal, and a scheduler controlling a transmission of the communication data based on an output signal of the extractor. The scheduler, upon detection of a handover request, controls the buffer so as to preferentially perform the data transmission by raising an order of the data transmission for a handover object terminal before executing the handover.

FIG.1

**Description**

Technical Field

The present invention relates to a radio base station and a mobile communication system, and in particular to a radio (wireless) base station and a mobile communication system which are utilized for W-CDMA (Wideband-Code Division Multiple Access) and the like.

Background Art

Recently, developments of W-CDMA are expected as one of the high-speed packet communication methods in the next generation mobile communication system.

In a mobile communication system using packets such as W-CDMA, the specification has been reviewed in 3GPP (3rd Generation Partnership Project), where with a protocol prescribed thereby, packet communications are performed between a radio base station (hereinafter occasionally referred to as a base station) and a terminal (a mobile phone etc.).

At present, in 3GPP, the HSDPA (High Speed Down Link Packet Access) method has been reviewed for performing a higher speed packet communication.

1.1 Concerning HSDPA

The HSDPA is a technology for making a downward packet communication (communication from base station to terminal) a higher one of 10Mbps, and has been reviewed to be standardized by Release 5 that is the specification of 3GPP as above-mentioned. By being compared with Release 99 that is the conventional specification, it has a large modification in the radio channel configuration, and the introduction of a retransmission (resending) control and a scheduler (portion).

Hereinafter, the radio channel configuration will be briefly described and a scheduler directly related to the present invention will be described as follows:

1.2 Concerning HSDPA radio channel

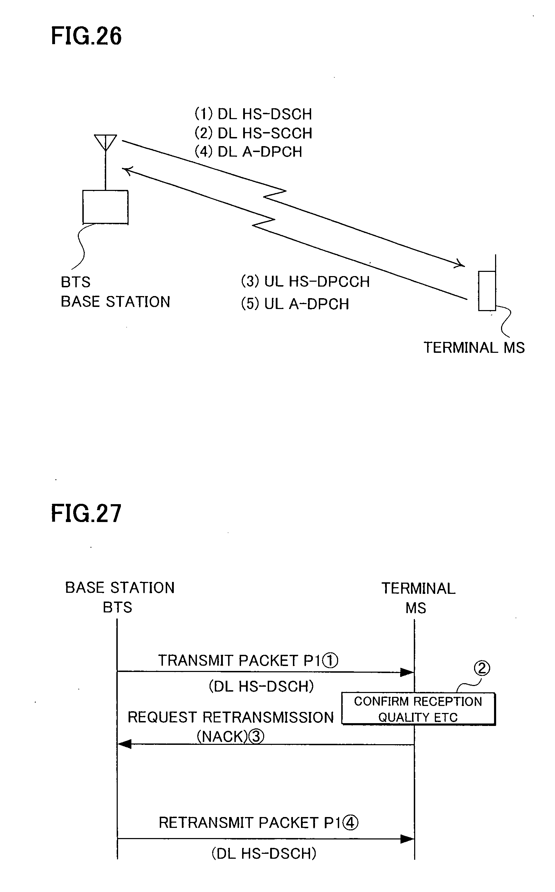

As shown in Fig.26, the following five kinds of radio channels are set up between a base station BTS and a mobile terminal (mobile station) MS, thereby realizing the HSDPA:

(1) DL HS-DSCH (Down Link High Speed — Dedicated Shared Channel)
(2) DL HS-SCCH (Down Link High Speed — Shared Control Channel).
(3) UL HS-DPCCH (Up Link High Speed — Dedicated Physical Control Channel)
(4) DL A DPCH (Down Link Associate Dedicated Physical Channel)
(5) UL A-DPCH (Up Link Associate Dedicated Physical Channel)

(1) DL HS-DSCH is a channel for transferring radio packet data from the base station BTS to the terminal MS. It is to be noted that data carried on (1) DL HA-DSCH are coded with turbo codes or the like)
(2) DL HS-SCCH is a channel for transferring information such as coding information, modulation method and transmission bit number of radio packets transferred by (1) DL HS-DSCH.
(3) UL HS-DPCCH is a channel for transferring a receiving status (whether or not packets are received) or a receivable bit number to the base station BTS from the terminal MS.
(4) DL A-DPCH and (5) UL A-DPCH are radio channels individually extended between terminals MS and the base station BTS. These channels are used from the conventional Release 99.

1.3 Concerning retransmission control and scheduler

Retransmission controls in the conventional Release 99 are performed by a radio channel control station or radio network controller (RNC) in an upper side of a base station. Namely, as shown in Fig.27, upon reception of a packet P1 from the base station BTS (Fig. 27 ① ) with DL HS-DSCH, the terminal MS confirms the reception quality or the like (Fig.27 ② ). When the terminal MS finds an error and makes a retransmission request NACK (Fig.27 ③ ), the retransmission request NACK is brought up to the radio channel control station whereby the retransmission (Fig.27 ④ ) of the packet P1 is performed again through the base station BTS.

Meanwhile, in Release 5, the following two points are to be executed in order to realize a high speed packet transmission, namely to enhance an effective transmission speed (throughput);

(1) The base station is in charge of retransmission controls, thereby narrowing the retransmission interval.
(2) A scheduler is introduced to set and transmit the priority (order) of transmission depending on the contents of services to be transmitted or the condition of a terminal.

Hereinafter, these points will be briefly described:

(1) Concerning retransmission control

The flow of retransmission control is the same as that in Fig.27 above-described. The arrangement of the terminal of this case is shown in Fig.28, and the arrangement of the base station is shown in Fig.29.

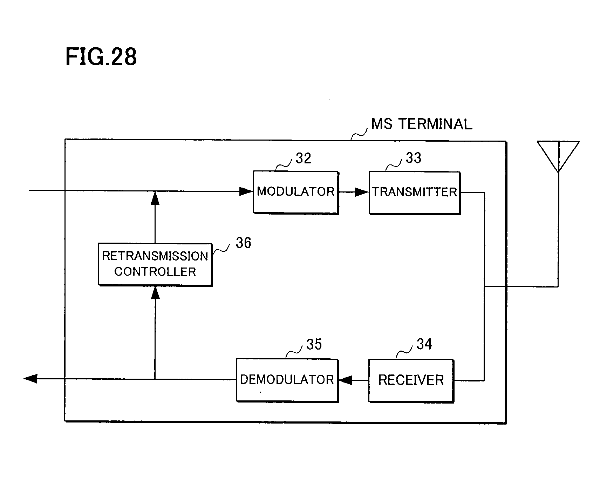

In the terminal MS, as shown in Fig.28, a packet transferred with the above-mentioned HS-DSCH is received at a receiver 34 and demodulated/decoded at a demodulator 35, and then a retransmission controller 36 checks CRC added to the packet, thereby confirming the receiving status of the packet (whether or not the packet is received without errors). If it is found by the retransmission controller 36 that there is no error for example, an ACK (reception confirmation) signal is transmitted with the above-mentioned UL HS-DPCCH through a modulator 32 and a transmitter 33 to the base station BTS for requesting a new transmission thereof.

To the contrary, if it is found that there is an error, the retransmission controller 36 transmits a NACK (retransmission request) signal with UL HS-DPPCH likewise to the base station BTS for the retransmission request. At this time, the retransmission request is repeated until no error reception is achieved, for example.

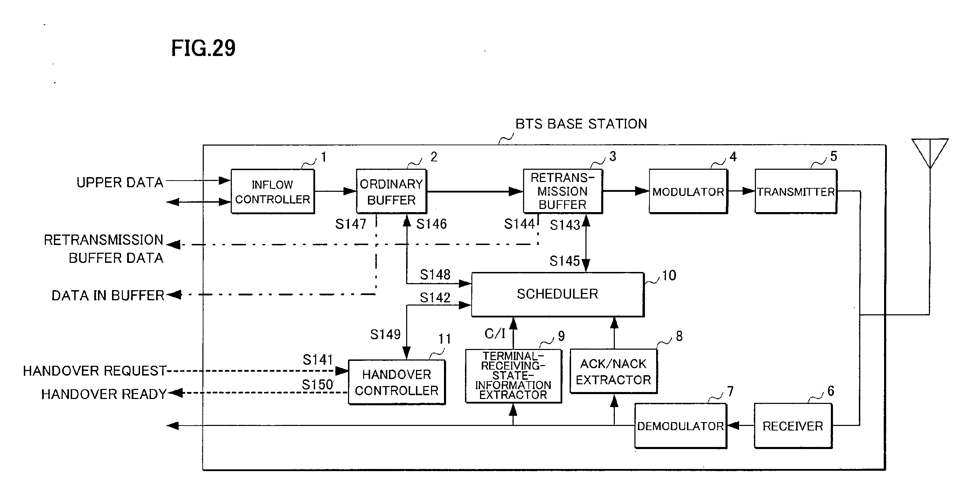

Furthermore, in the base station BTS, as shown in Fig.29, a receiver 6 receives a packet of UL HS-DPCCH, and a demodulator 7 demodulates/decodes it. Then, an ACK/NACK extractor 8 extracts an ACK/NACK signal from the terminal MS to be transferred to a scheduler 10.

Having received the NACK signal, the scheduler 10 retransmits data stored in a retransmission buffer 3 through a modulator 4 and a transmitter 5. Also, having received the ACK signal, the scheduler 10 discards information stored in the retransmission buffer 3, takes out data from an ordinary buffer 2 to be stored in the retransmission buffer 3, and transmits them through the modulator 4 and the transmitter 5.

It is to be noted that while a retransmission controller may be substituted for the scheduler 10 and the transmission buffer 3 may be provided within the modulator 4, the following description, as shown in the figures, is applied to an example where the retransmission control is performed by the scheduler 10 and the retransmission buffer 3 is provided at the former stage of the modulator 4.

(2) Concerning scheduler

The function of the above scheduler will be described in the following:

Data toward terminals transmitted from an upper layer are held in the ordinary buffer 2 provided per each terminal. Then, by a terminal-receiving-state-information extractor 9, a receiving status such as C/I transmitted from the terminal is extracted from the demodulated signal of the demodulator 7 and is transferred to the scheduler 10.

The scheduler determines to which terminal the transmission should be prioritized or preferential by using the receiving-state-information, thereby controlling a switch (not shown). Then, ordinary data whose transmission order has been determined are re-stored in the retransmission buffer 3 from the ordinary buffer 2 and modulated by the modulator 4 to be transmitted from the transmitter 5.

As a method determining to which terminal the transmission should be prioritized or preferential, a Max C/I method, Round Robin method, Proportional Fairness method or the like is known. Particularly, when a method using C/I such as the Max C/I method is selected, a terminal with a better C/I is preferentially selected. For example, the Max C/I method is for determining a priority of transmission or an assigned time in order from a terminal which has the best receiving condition or the best C/I, in view of C/I of each terminal.

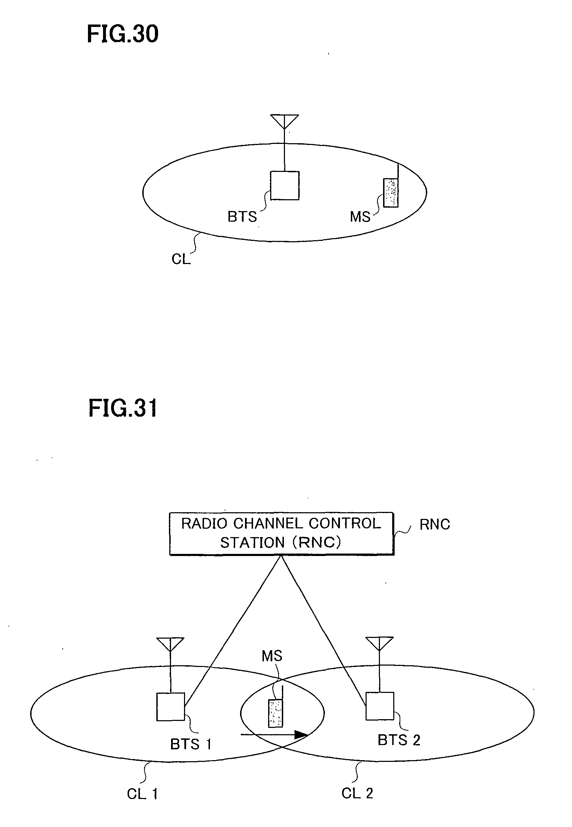

At this time, as shown in Fig.30, when the terminal MS is positioned in the vicinity of the border of a cell CL, the C/I is relatively deteriorated, so that no opportunity for transmission is assigned or the transmission time becomes short.

1.4 Concerning problems on scheduling

As above-described, a terminal positioned in the vicinity of the border of a cell has generally a bad receiving status (for example C/I). This is because "C", namely the power of desired wave (Carrier) is attenuated due to a far distance from the base station to the terminal while "I", namely interference waves are made unchanged or larger in the presence of interference waves from other base stations BTS so that the C/I is reduced.

At this time when the scheduler of the base station preferentially performs assignments in order from a terminal with a better C/I, a terminal in the vicinity of the cell border has a bad C/I as above-described, so that no opportunity of transmission is given, or the assigned time becomes short even if it is given. As a result, it is disadvantageous that the throughput of the terminal is deteriorated or any communication is disabled at the worst case.

1.5 Concerning to problems at handover time

(1) Concerning handover and retransmission control

A handover generally refers to an operation when the terminal MS changes its destination, as being moved from a cell CL 1 of a base station BTS 1 to a cell CL 2 of a base station BTS 2 as shown in Fig.31. The handover depending on its method can be classified into a soft handover, a hard handover, an inter-frequency handover, a cell change and the like, where it will be hereafter abbreviated as "handover".

It is to be noted that HS-DSCH, based on the specification (3GPP Release 5), performs a cell change, not performing the conventional soft handover or hard handover. The cell change is the same as the hard handover in that a channel is once disconnected followed by a movement between cells and reconnected in a cell of the moved destination.

On the other hand, UL A-DPCH and DL A-DPCH enable a soft handover to be performed as well, which is a method for performing a handover only by changing spreading codes without changing the frequency, enabling a handover to be made without disconnecting the channel.

A handover in W-CDMA system is controlled by a radio channel control station (RNC) as shown in Fig.31.

The operation of this handover will be described in a case where the base station having the arrangement shown in Fig.29 for example is applied with a high speed packet communication (HSDPA).

It is now supposed that communications are being performed between the terminal MS and the base station BTS 1, a handover to a base station BTS 2 is determined by the radio channel control station RNC and a retransmission is being made so that retransmission data are stored in the retransmission buffer 3 shown in Fig.29.

For performing the handover, the following three alternatives are conceivable:

a) The retransmission data are discarded;
b) The retransmission data are transferred to the base station BTS 2 of the handover destination;
c) The retransmission controls are repeated until the packet transmission is completed or a packet can be received at the terminal without errors.

(2) Concerning problems due to handover and retransmission control

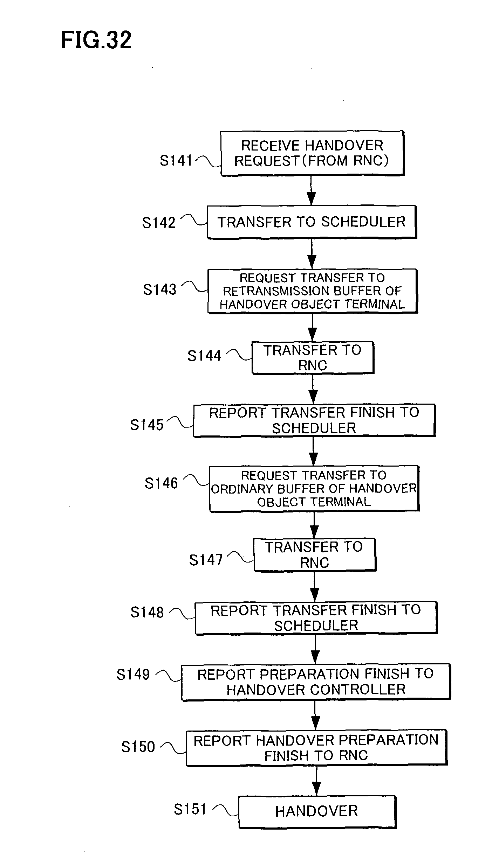

The above handover method a) cannot be selected because the data are lost. The method b) is the most practical method which, however, requires data transmission between base stations, different from the conventional method. This will be hereinafter described referring to Figs. 29 and 32, where it is assumed that the retransmission is being made when the handover is decided by the radio channel control station RNC.

At first, a handover request is sent from the radio channel control station RNC to the handover controller 11 (step S141 in Fig.29 or 32). In response, the handover controller 11 requests the scheduler 10 to transfer data (step S142). The scheduler 10 requests the retransmission buffer 3 to transfer retransmission data of a handover object terminal (terminal to be handed over) to the base station BTS 2 which is the handover destination (step S143). The retransmission buffer 3 transfers the retransmission data to the base station BTS 2 through the radio channel control station RNC (step S144), and after the transfer, notifies the scheduler 10 of the retransmission completion (finish) (step S145).

Then, the scheduler 10 requests the normal buffer 2 for the handover object terminal to transfer the data stored similarly to the base station BTS 2 (step S146). The buffer 2 performs transferring the data through the radio channel control station RNC (step S147), and after the transfer, reports the transfer completion to the scheduler 10 (step S148).

In response, the scheduler 10 reports the entire transfer completion to the handover controller 11 (step S149), which then reports the handover having been prepared to the radio channel control station RNC (step S150). After this, the handover is implemented (step S151).

On the other hand, it is understood that the method c) is a simple one because it may use the conventional control, however, as above-noted a handover terminal exists in the vicinity of the border of ordinary cells, having a bad C/I so that the priority set by the scheduler 10 is low and the time is short (not assigned at the worst case).

Accordingly, it is disadvantageous that when a handover is performed after the retransmission is completed, the operation time is lengthened or the handover cannot be performed for a long time because of no sufficient time for the handover at the worst case.

Such a problem at a handover time has arisen not only for the retransmission data stored in the retransmission buffer but also ordinary data stored in the ordinary buffer.

Also as another conventional technology, a preferential call connecting device for radio communication system has been proposed in which in the absence of space for radio channels with respect to preferential call (a call with a high priority or a call with a high priority for QoS), the radio channels are preferentially assigned when a space is generated (for example, see patent document 1).

(Patent document 1)

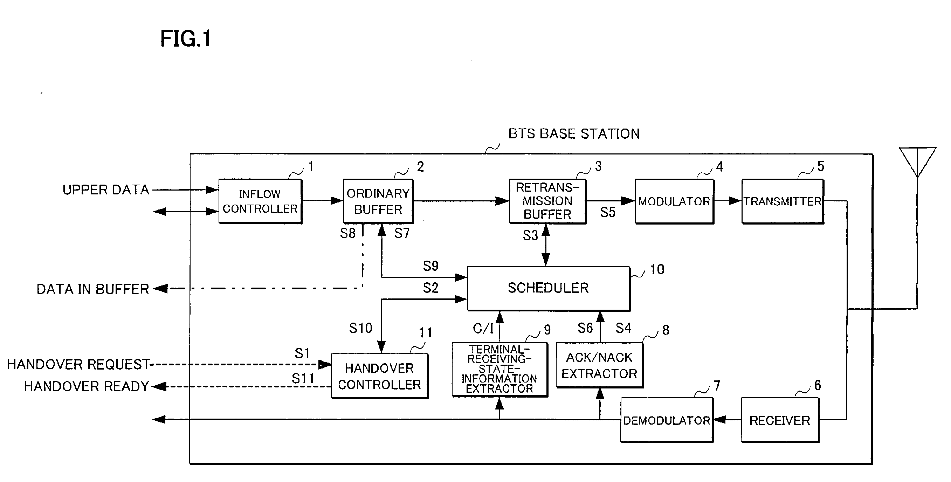

Japanese patent application raid open number 11-8876 (abstract, Fig.1)

However, in case of the conventional technology, a preferential call is assigned without any handover or channel disconnection for the purpose of keeping restrictions such as transmission speed, so that a preferential assignment is performed to a call with a high priority (i.e. service attribute), in which the communication call is made preferential in any case unless the service is changed

It is accordingly an object of the present invention to provide a radio base station and a mobile communication system wherein in the above-noted method c), the transmission time of retransmission data or ordinary data at handover time is shortened, thereby securing a transmission assignment time.

Disclosure of Invention

In order to achieve the above-mentioned object, a radio base station according to the present invention, comprises, a buffer holding communication data to a terminal, an extractor extracting a communication request signal from a received signal, and a scheduler controlling a transmission of the communication data based on an output signal of the extractor, the scheduler, upon detection of a handover request, controlling the buffer so as to preferentially perform the data transmission by raising an order of the data transmission for a handover object terminal before executing the handover.

Namely, in the present invention, an output signal of the extractor is a NACK signal in case a received signal includes a retransmission request or an ACK signal in case ordinary data are requested, so that based on the output signal the scheduler controls the transmission of communication data to a terminal which is held in a buffer.

At this time, upon detecting a handover request, the scheduler raises or elevates the order of data transmission to a handover object terminal (terminal to be handed over) which the scheduler itself knows, thereby preferentially performing the data transmission from the buffer.

Thus, regardless of a reception status or service indicated by C/I etc of the handover object terminal, the order of data transmission at the scheduler is raised or advanced, which is equivalent to the transmission assignment time being relatively increased, whereby the data transmission to the handover object terminal is completed before the handover to shorten the time required for the handover.

In the above, the communication data may be retransmission data or ordinary data, so that the above buffer may be a retransmission buffer or an ordinary buffer.

In case the above buffer is the retransmission buffer storing the retransmission data, this radio base station may further comprise an ordinary buffer, in which the scheduler, upon detection of the retransmission buffer being empty, preferentially transmits ordinary data for the handover object terminal among from ordinary data held in the ordinary buffer.

Namely, after the retransmission data is preferentially transmitted at handover time, the ordinary data held in the ordinary buffer are also preferentially transmitted.

This radio base station may further comprise an inflow controller, in which the scheduler, upon detection of the handover request, stops an inflow of data for the handover object terminal from an upper side by controlling the inflow controller.

Namely, since data are flowed into the radio base station even at handover time, a preferential data transmission at handover time is made possible more surely by suppressing the data inflow at the inflow controller preliminarily.

The above handover request may be provided from for example a radio channel control station (RNC).

On the other hand, the base station may detect the handover request similarly by the following various methods before it is provided from the radio channel control station.

This radio base station may further comprise a propagation time calculator calculating a signal propagation time between the terminal and the base station from a data transmission time to a reception time of the output signal of the extractor, and a terminal distance calculator calculating a distance between the terminal and the base station from the propagation time; the scheduler detecting the handover request by comparing the distance with a threshold.

In this case, the propagation time calculator and the terminal distance calculator may be included in the scheduler.

Namely, data transmission is performed from the base station to the terminal, a time of an ACK or NACK signal returned from the terminal, i.e. a signal propagation time between terminal-base station (BS) is calculated, a distance between terminal-base station is calculated from the propagation time, and the calculated distance is compared with a threshold value of a distance required for the handover, whereby the scheduler regards it as the terminal approaching to the border of cells so that a handover request will be generated shortly or as the handover request being detected.

Thus, after the detection of the handover request, it is made possible likewise to raise the order of data transmission to a handover object terminal and to complete the data transmission before the handover.

Alternatively, this radio base station may further comprise a terminal receiving-electric-field-strength(intensity)-information extractor extracting a receiving-electric-field-strength-information calculated from a received signal, and transmitted by the terminal; the scheduler detecting the handover request by comparing the receiving-electric-field-strength with a threshold.

Also in this case, the terminal-receiving-electric-field-strength-information extractor may be included in the scheduler.

Namely, a receiving-electric-field-strength (or reception power) detected on the terminal side is extracted in the radio base station, and the scheduler compares the receiving-electric-field-strength with a threshold value, thereby regarding it as the detection of the handover request.

Alternatively, this radio base station may further comprise a terminal-position-information extractor extracting terminal-position-information measured and transmitted by the terminal, a position information memory storing position information of the station itself, and a terminal distance calculator calculating a distance between the terminal and the base station from the terminal-position-information and the position information of the station itself; the scheduler detecting the handover request by comparing the distance with a threshold.

Also in this case, the terminal-position-information extractor and the position information memory and the terminal distance calculator may be included in the scheduler.

Namely, in this case, the scheduler calculates a distance between terminal-base station from terminal-position-information obtained from the terminal and position information of the base station itself preliminarily obtained, and prepares the distance with a threshold value, thereby regarding it as the detection of the handover request as in the above.

Also, this radio base station may further comprise a connected-BS-number-information extractor extracting connected-BS-number-information detected and transmitted by the terminal or provided from an upper side; the scheduler detecting the handover request by comparing the connected-BS-number with a threshold.

Also in this case, the connected-BS-number-information extractor may be included in the scheduler.

Namely, connected-BS-number-information detected on the terminal side or provided from an upper side such as the radio channel control station is extracted on the side of the radio base station to be compared with a threshold value, whereby the scheduler may regard it as the detection of the handover request.

Also, this radio base station may further comprise a terminal-position-information extractor extracting terminal-position-information measured and transmitted by the terminal, a memory storing past one of the terminal-position-information extracted by the terminal-position-information extractor, and a moving direction calculator calculating a moving direction of the terminal from present one of the terminal-position-information extracted by the terminal-position-information extractor and the past terminal-position-information stored in the memory; the scheduler detecting the handover request from the moving direction.

Also in this case, the terminal-position-information extractor, the memory and the moving direction calculator may be included in the scheduler.

Namely, in this case, terminal position information measured at the terminal is extracted at the base station, and the scheduler calculates the moving direction of the terminal with a present value and a past value of the terminal position information, thereby regarding it as a substantial handover request based on the moving direction in which the terminal is moving toward the cell border.

Furthermore, this radio base station may further comprise a terminal-position-information extractor extracting terminal-position-information measured and transmitted by the terminal, and a terminal-moving-direction extractor extracting moving-direction-information of the terminal measured and transmitted by the terminal; the scheduler detecting the handover request from the terminal-position-information and the moving-direction-information.

Also in this case, the terminal-position-information extractor and the terminal-moving-direction extractor may be included in the scheduler.

Namely, in this case, the terminal position information measured at the terminal and the moving direction information of the terminal also calculated at the terminal are both extracted at the base station, and the scheduler regards it as the detection of the handover request from the terminal position information and the moving direction information as extracted.

Also, this radio base station may further comprise a terminal-position-information extractor extracting terminal-position-information measured and transmitted by the terminal, a memory storing past one of the terminal-position-information extracted by the terminal-position-information extractor, and a moving speed calculator calculating a moving speed of the terminal from present one of the terminal-position-information extracted by the terminal-position-information extractor and the past terminal-position-information stored in the memory; the scheduler detecting the handover request by comparing the moving speed with a threshold.

Also in this case, the terminal-position-information extractor, the memory and the moving speed calculator may be included in the scheduler.

Namely, in this case, by using a past value and a present value of the terminal position information measured at the terminal, the moving speed of the terminal is calculated at the base station to be compared with a threshold value, thereby regarding it as the detection of the handover request.

Also according to the present invention, various kinds of mobile communication systems including the above radio base station are provided as follows:

A mobile communication system comprising, a terminal calculating receiving-electric-field-strength-information from a reception signal to be transmitted and the above-noted radio base station; the radio base station extracting the receiving-electric-field-strength-information, and detecting the handover request by comparing the receiving-electric-field-strength with a threshold;

A mobile communication system comprising, a terminal measuring and transmitting terminal-position-information, and the above-noted radio base station; the radio base station extracting the terminal-position-information, storing position information of the station itself, calculating a distance between the terminal and the base station from the terminal-position-information and the position information of the station itself, and detects the handover request by comparing the distance with a threshold;

A mobile communication system comprising, a terminal detecting and transmitting connected-BS (base station) -number-information, and the above-noted radio base station; the radio base station extracting the connected-BS-number-information, and detecting the handover request by comparing the connected-BS-number with a threshold;

In the above-noted mobile communication system, the terminal may detect the connected-BS-number by site diversity when the receiving-electric-field-strength is low;

A mobile communication system comprising, a terminal calculating and transmitting terminal-position-information, and the above-noted radio base station; the radio base station extracting the terminal-position-information, storing past one of the terminal-position-information extracted, calculating a moving direction of the terminal from present one of the terminal-position-information extracted and the past terminal-position-information, and detecting the handover request from the moving direction;

A mobile communication system comprising, a terminal calculating and transmitting terminal-position-information and moving-direction-information of the terminal, and the above-noted radio base station; the radio base station extracting the terminal-position-information, and the moving-direction-information and detecting the handover request from the terminal-position-information and the moving-direction-information;

A mobile communication system comprising, a terminal measuring and transmitting terminal-position-information, and the above-noted radio base station; the radio base station extracting the terminal-position-information, storing past one of the terminal-position-information extracted, calculating a moving speed of the terminal from present one of the terminal-position-information extracted and the past terminal-position-information, and detecting the handover request by comparing the moving speed with a threshold;

A radio base station comprising means preferentially processing retransmission data for a handover object terminal.

Brief Description of the Drawings

Fig.1 is a block diagram showing an arrangement of an embodiment (1) of a radio base station according to the present invention;

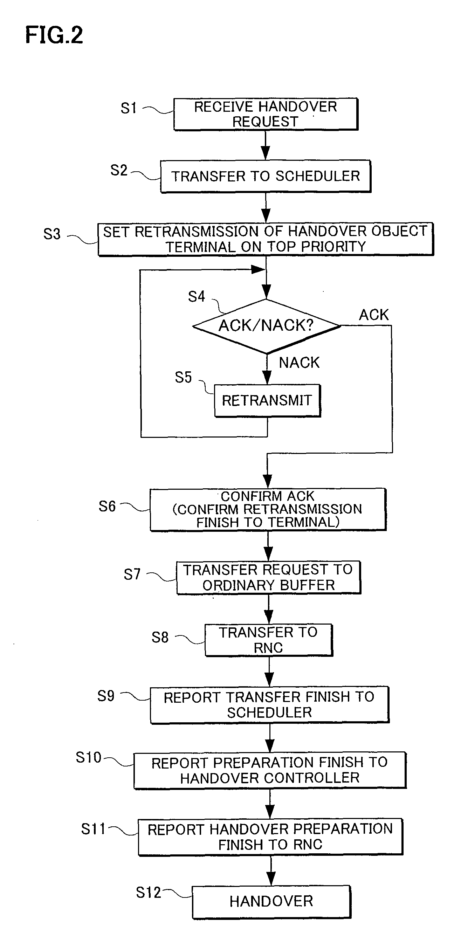

Fig.2 is a flow chart showing an operation at the time of handover in a radio base station according to the present invention shown in Fig.1;

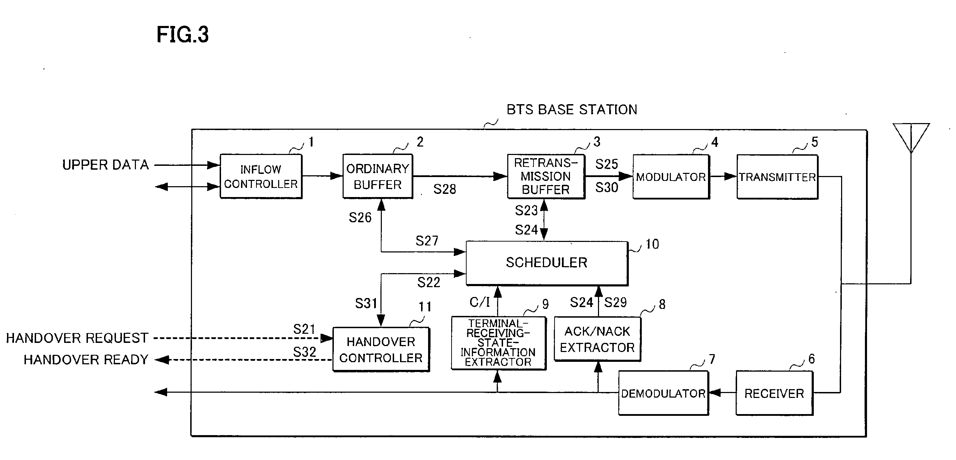

Fig.3 is a block diagram showing an arrangement of an embodiment (2) of a radio base station according to the present invention;

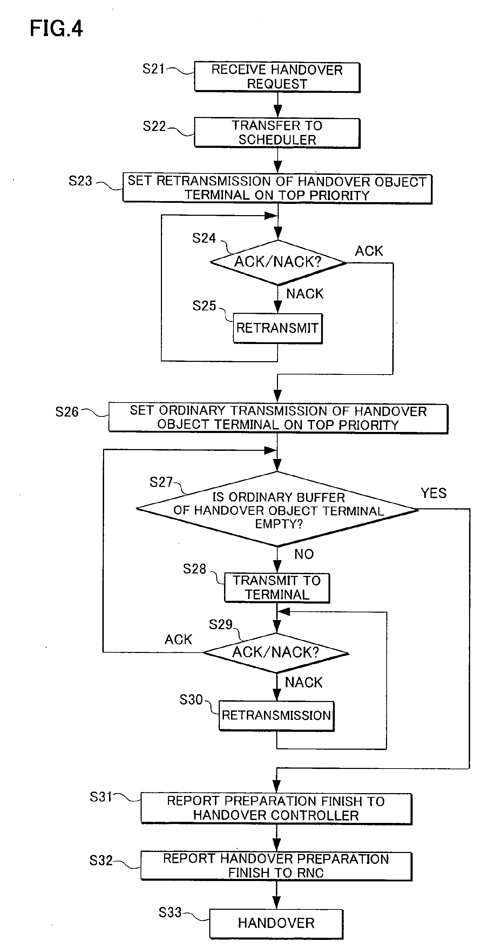

Fig.4 is a flow chart showing an operation at the time of handover in a radio base station according to the present invention shown in Fig.3;

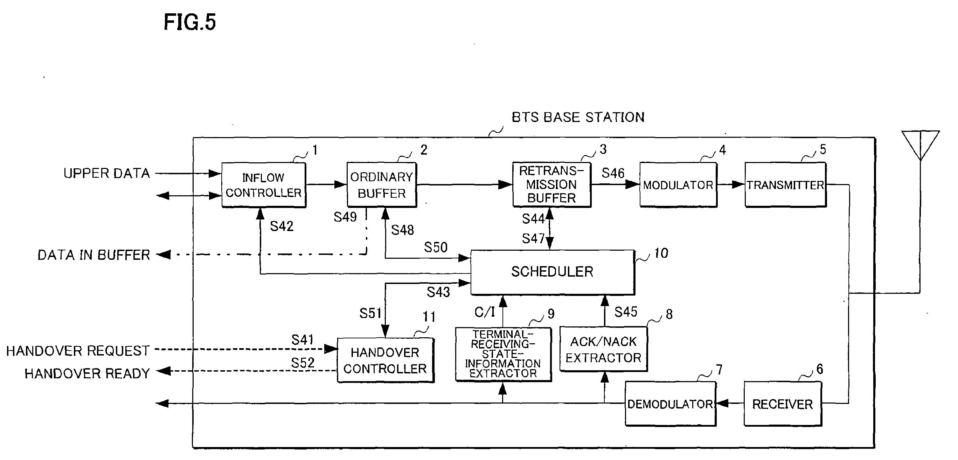

Fig.5 is a block diagram showing an arrangement of an embodiment (3) of a radio base station according to the present invention;

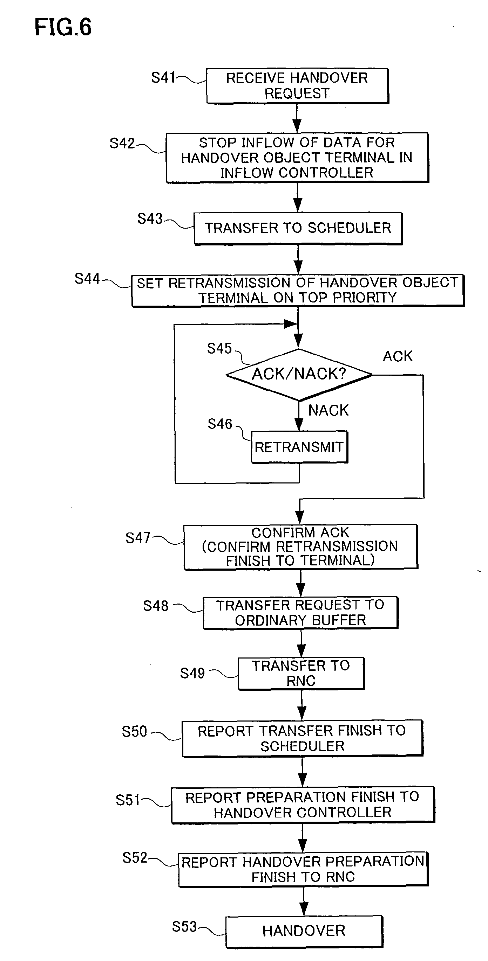

Fig.6 is a flow chart showing an operation at the time of handover in a radio base station according to the present invention shown in Fig.5;

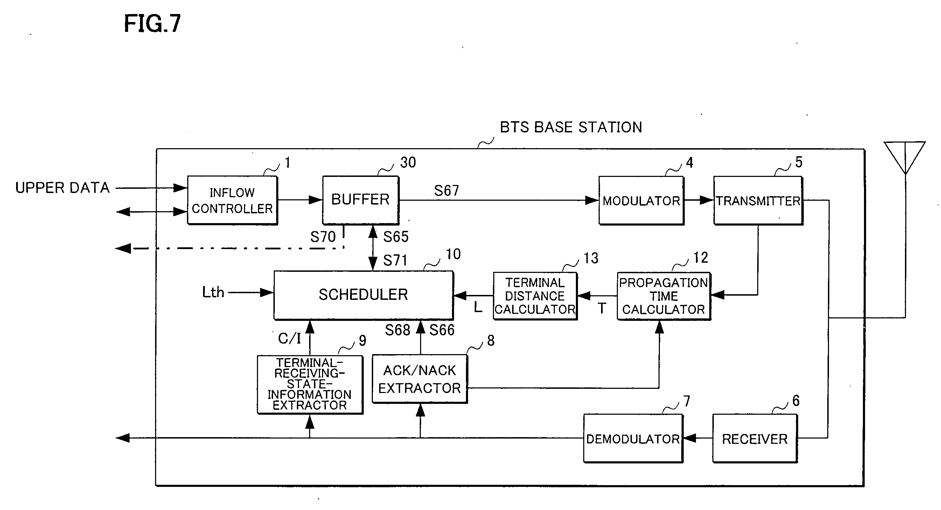

Fig.7 is a block diagram showing an arrangement of an embodiment (4) of a radio base station according to the present invention;

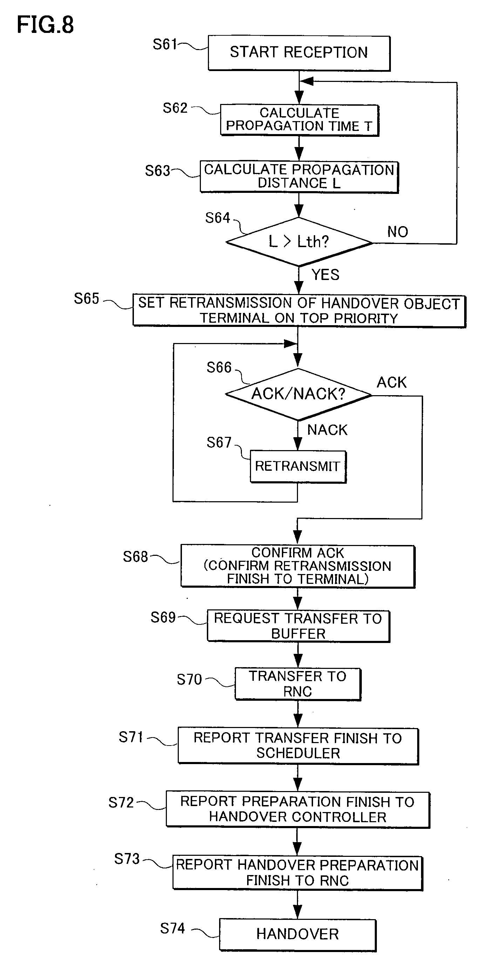

Fig.8 is a flow chart showing an operation at the time of handover in a radio base station according to the present invention shown in Fig.7;

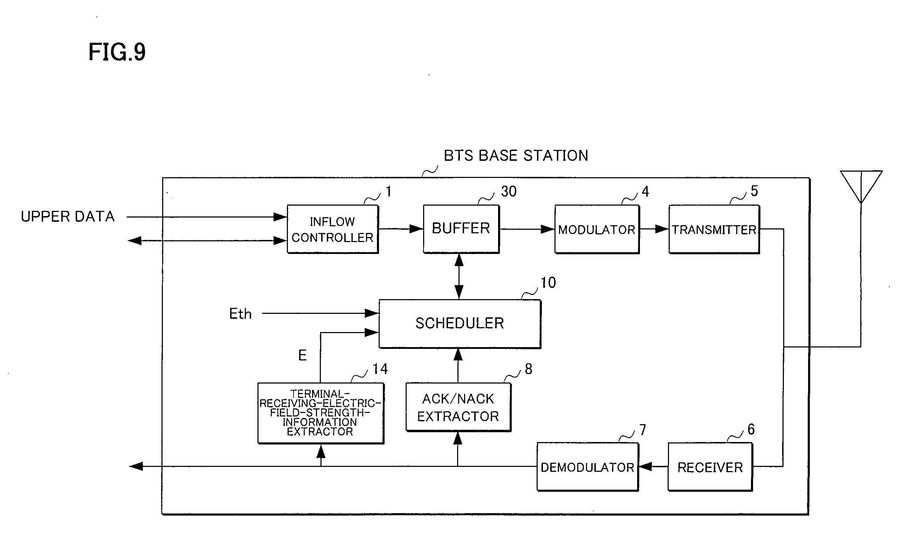

Fig.9 is a block diagram showing an arrangement of an embodiment (5) of a radio base station according to the present invention;

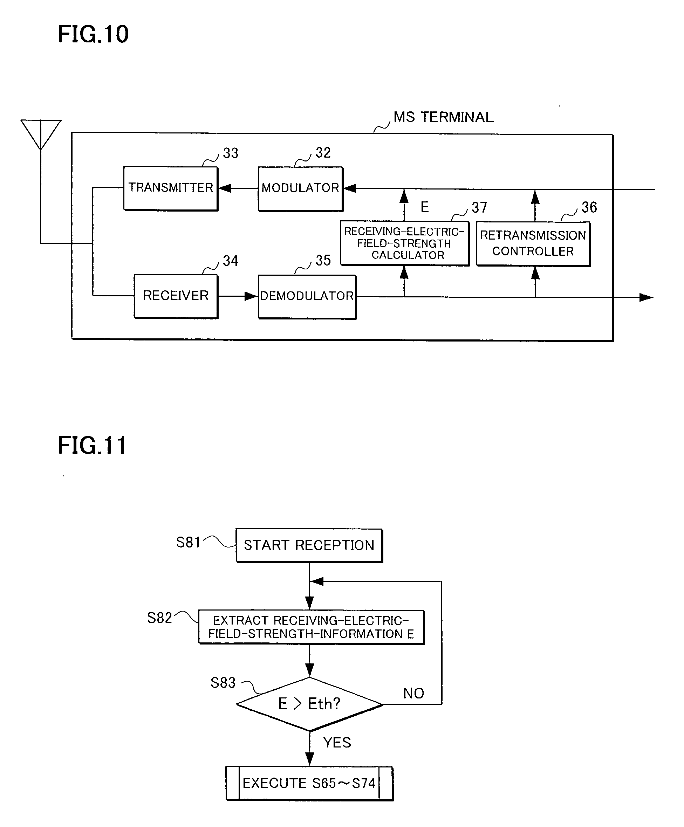

Fig.10 is a block diagram showing an arrangement of an embodiment of a terminal corresponding to the radio base station shown in Fig.9;
Fig.11 is a flow chart showing an operation at the time of handover in a radio base station according to the present invention shown in Fig.9;

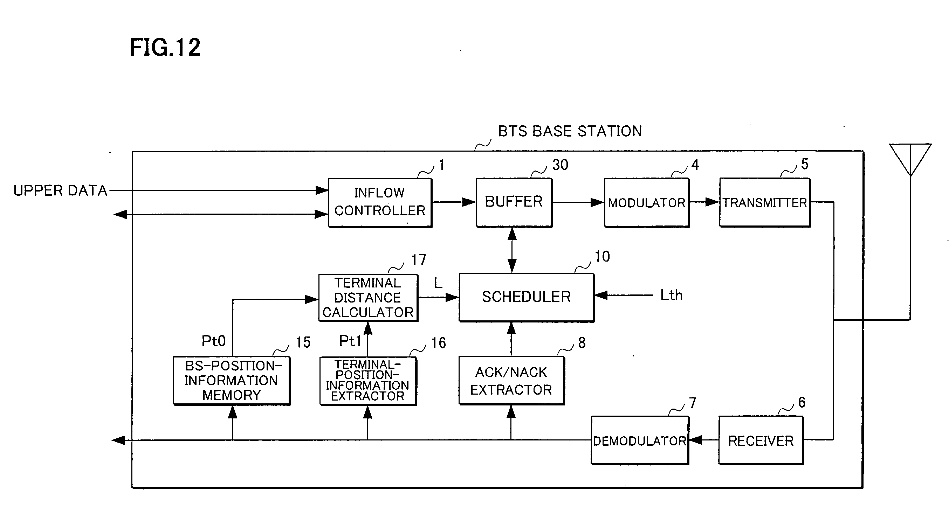

Fig.12 is a block diagram showing an arrangement of an embodiment (6) of a radio base station according to the present invention;

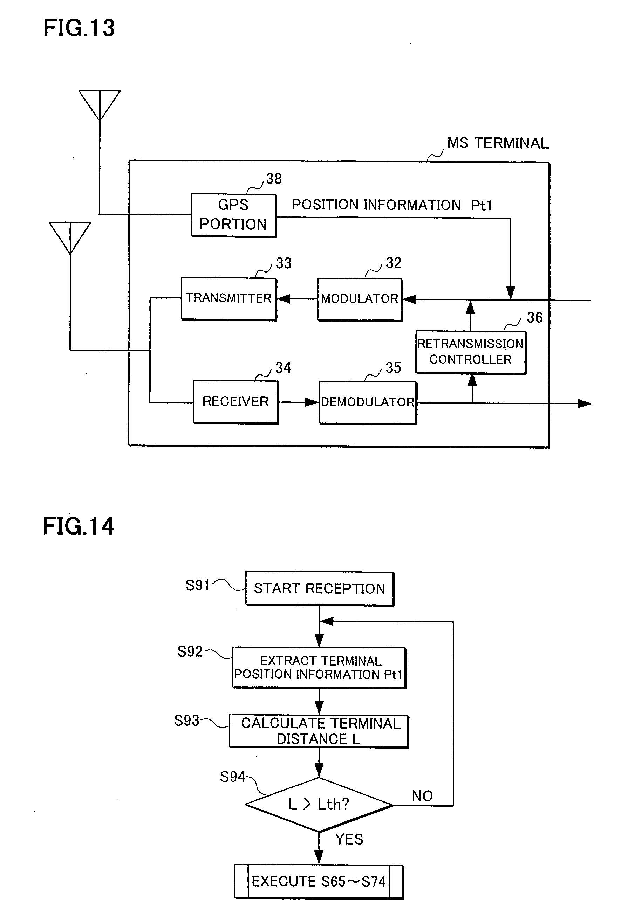

Fig.13 is a block diagram showing an arrangement of an embodiment of a terminal corresponding to the radio base station shown in Fig.12;
Fig.14 is a flow chart showing an operation at the time of handover in a radio base station according to the present invention shown in Fig.12;

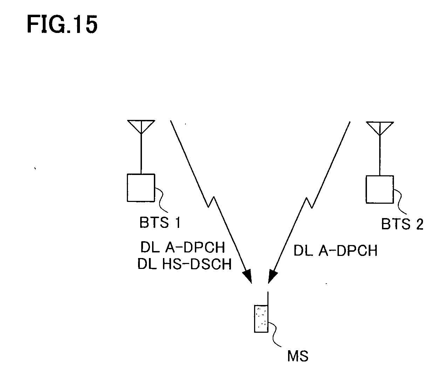

Fig.15 is a diagram showing an example where a terminal receives signals from a plurality of base stations in a diversity mode;

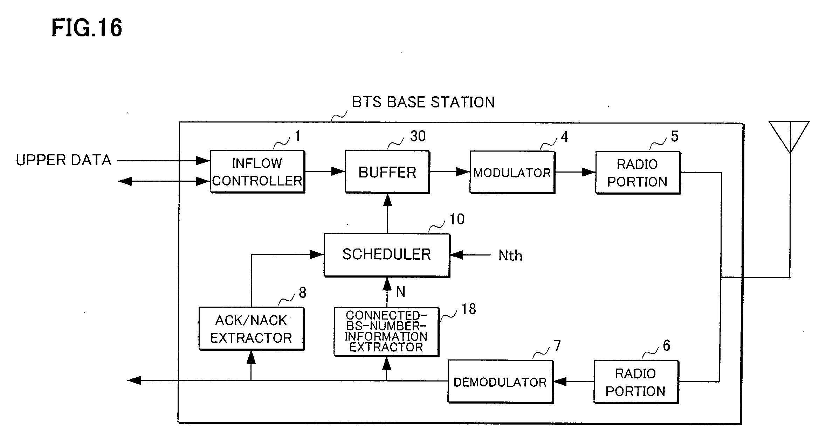

Fig.16 is a block diagram showing an arrangement of an embodiment (7) of a radio base station according to the present invention;

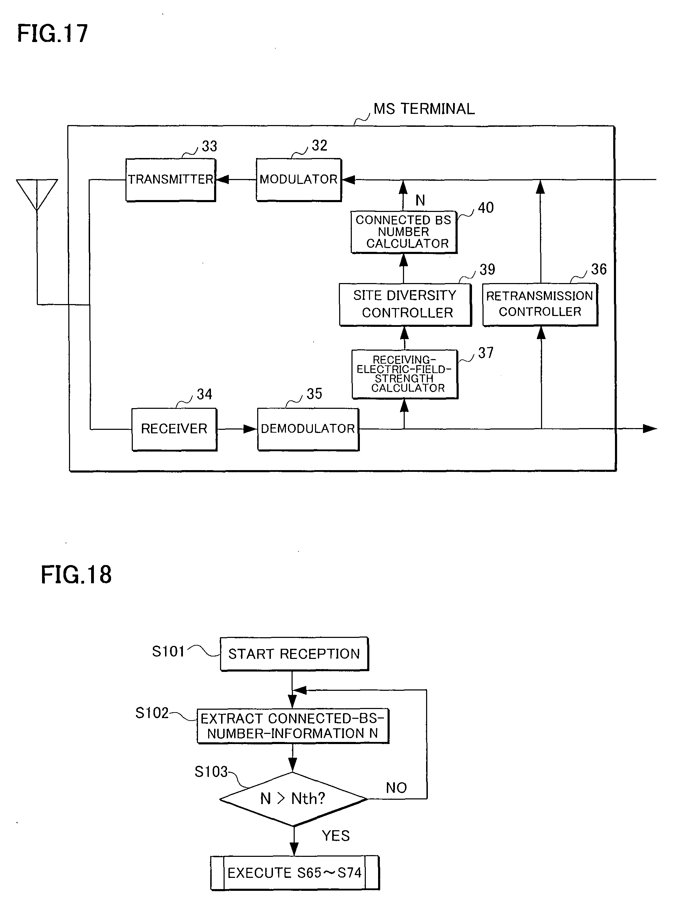

Fig.17 is a block diagram showing an arrangement of an embodiment of a terminal corresponding to the radio base station shown in Fig.16;
Fig.18 is a flow chart showing an operation at the time of handover in a radio base station according to the present invention shown in Fig.16;

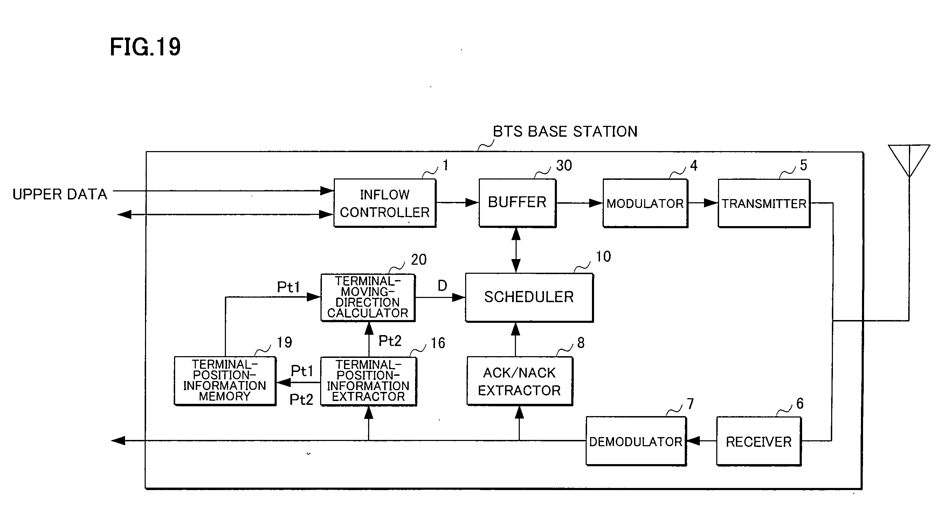

Fig.19 is a block diagram showing an arrangement of an embodiment (8) of a radio base station according to the present invention;

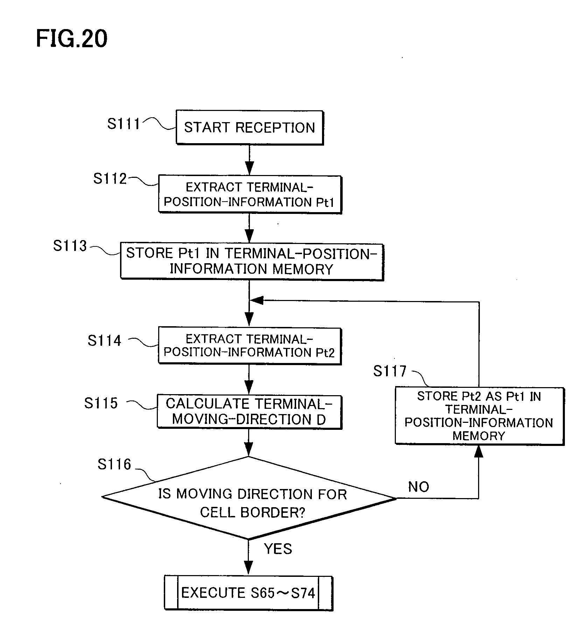

Fig.20 is a flow chart showing an operation at the time of handover in a radio base station according to the present invention shown in Fig.19;

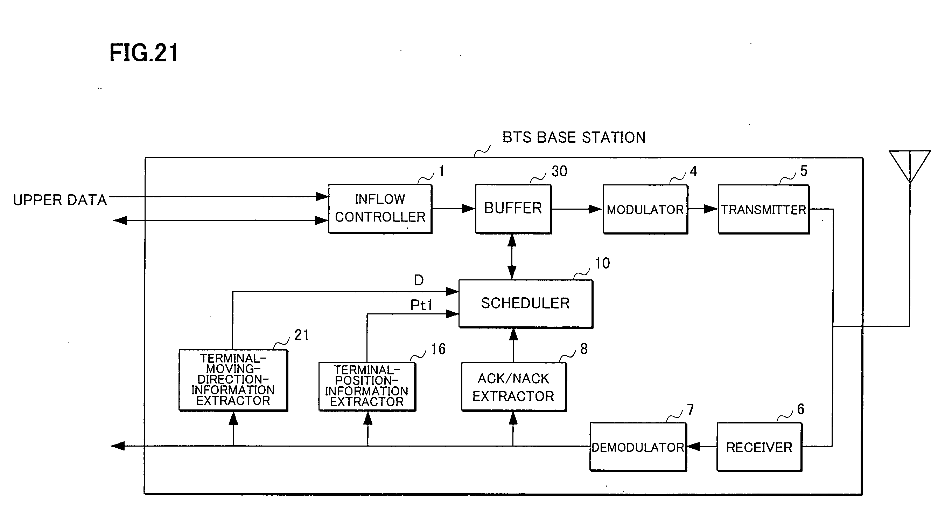

Fig.21 is a block diagram showing an arrangement of an embodiment (9) of a radio base station according to the present invention;

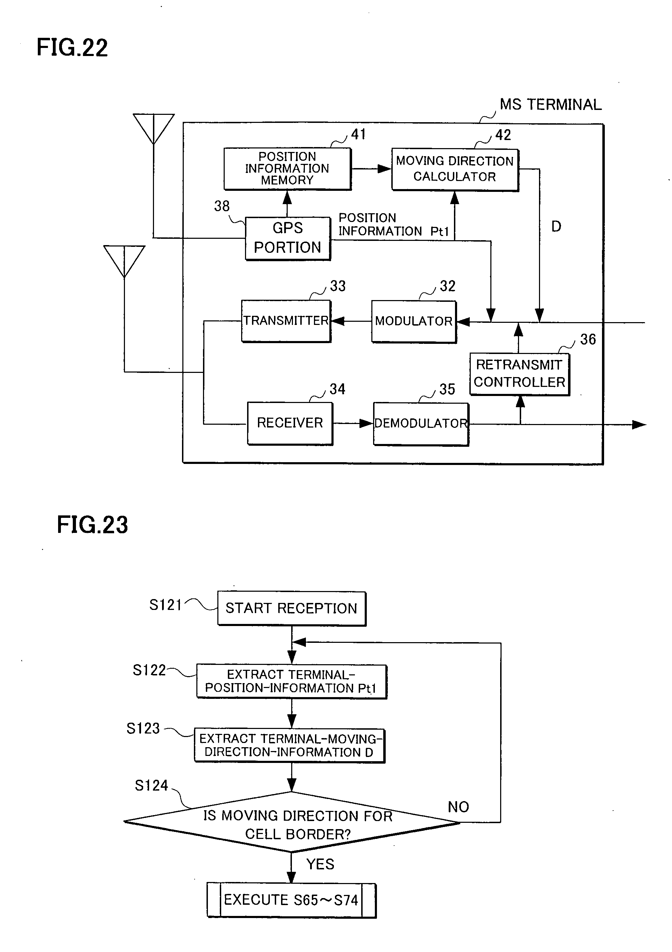

Fig.22 is a block diagram showing an arrangement of an embodiment of a terminal corresponding to the radio base station shown in Fig.21;
Fig.23 is a flow chart showing an operation at the time of handover in a radio base station according to the present invention shown in Fig.21;

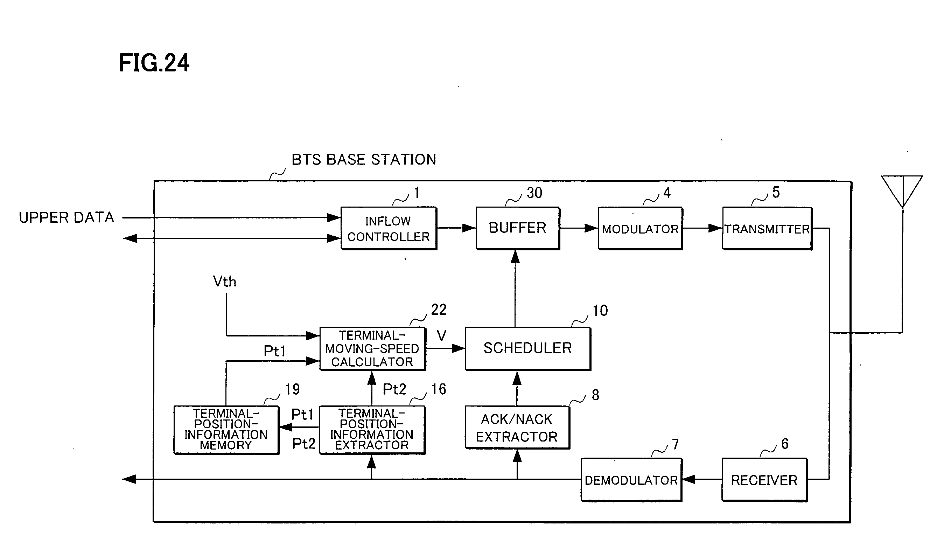

Fig.24 is a block diagram showing an arrangement of an embodiment (10) of a radio base station according to the present invention;

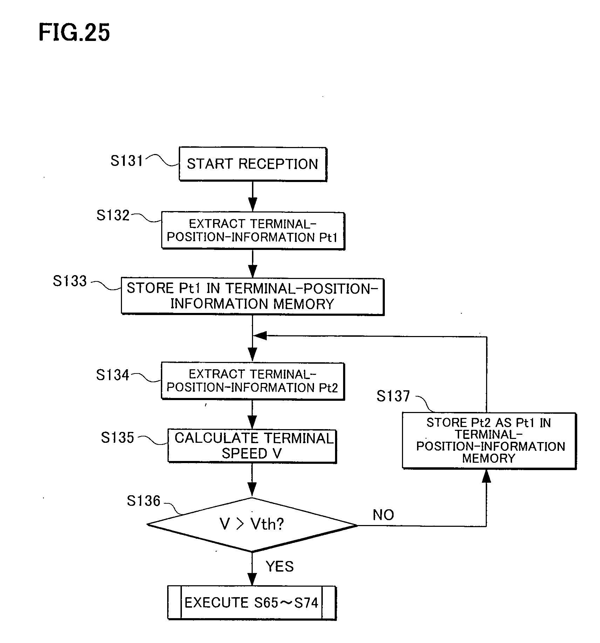

Fig.25 is a flow chart showing an operation at the time of handover in a radio base station according to the present invention shown in Fig.24;
Fig.26 is a diagram showing HSDPA radio channels set between a base station and a terminal in W-CDMA;
Fig.27 is a sequence diagram for explaining a retransmission procedure between BS-terminal known as the prior art;

Fig.28 is a block diagram showing an arrangement of a terminal known as the prior art;

Fig.29 is a block diagram showing an arrangement of a radio base station known as the prior art;

Fig.30 is a diagram showing a position relationship between a base station and a terminal in a single cell;

Fig.31 is a diagram for explaining a handover between cells; and

Fig.32 is a flow chart showing an operation executed at the time of handover in the radio base station shown in Fig.29.

Description of Reference Numerals

BTS base station
MS terminal
RNC radio channel control station

1 inflow controller
2 ordinary buffer
3 retransmission buffer
4 modulator
5 transmitter
6 receiver
7 demodulator
8 ACK/NACK extractor
9 terminal-receiving-state-information extractor
10 scheduler
11 handover controller
12 propagation time calculator
13 terminal distance calculator
14    terminal-receiving-electric-field-strength-information extractor
15 BS-position-information memory
16 terminal-position-information extractor
17 terminal distance calculator
19 terminal-position-information memory
20 terminal-moving-direction calculator
21 terminal-moving-direction-information extractor
22 terminal-moving-speed calculator
30 buffer
32 modulator
33 transmitter
34 receiver
35 demodulator
36 retransmission controller
37 receiving-electric-field-strength calculator
38 GPS portion
39 site diversity controller
40 connected BS number calculator
41 position information memory
42 moving direction calculator

Throughout the figures, like reference numerals indicate like or corresponding components.

Best Mode for Carrying Out the Invention

Embodiment (1) (Preferentially transmitting only retransmission data of handover object terminal)

Fig.1 shows an embodiment (1) of a radio base station according to the present invention. This embodiment includes a transmission line in which an inflow controller 1, an ordinary buffer 2, a retransmission buffer 3, a modulator 4 and a transmitter 5 are serially connected in this order, and a reception line in which a receiver 6 and a demodulator 7 are serially connected in this order.

To the demodulator 7, an ACK/NACK extractor 8 and a terminal-reception-condition-information extractor 9 are connected. These are also connected to a scheduler 10. The scheduler 10 is mutually connected with the ordinary buffer 2 and the retransmission buffer 3, and mutually connected with a handover controller 11.

Fig.2 shows an operation example at the time of handover in the base station BTS shown in Fig.1. Hereinafter, the operation of the base station in Fig.1 will be described along the flow chart of Fig.2.

At first, it is supposed that a handover request is provided to the base station BTS from a radio channel control station (not shown) with respect to a terminal connected to the base station BTS. This handover request is received by the handover controller 11 (step S1), which then requests a handover control to the scheduler 10 (step S2). At this time, it is also supposed that a terminal to be handed over performs a retransmission control.

Also, the scheduler 10 prioritizes each terminal for scheduling the transmission order on the basis of receiving condition of each terminal (for example, C/I), service contents, maximum delay time or the like as in the Max C/I method.

The scheduler 10 requested with a handover control sets the retransmission of handover object terminal on the top (highest) priority (step S3), and informs it to the retransmission buffer 3.

Then, the scheduler 10 monitors the output signal of the ACK/NACK extractor 8, i.e. an ACK signal or a NACK signal (step S4), controls to retransmit retransmission data from the retransmission buffer 3 when the NACK signal is extracted (step S5), and confirms the completion of retransmission to the terminal when the ACK signal is returned from the terminal.

After the retransmission has been thus finished, the scheduler 10 makes a transfer request of ordinary data to the ordinary buffer 2 (step S7). This makes the ordinary buffer 2 transfer the ordinary data to the base station of a handover destination through the radio channel control station (step S8).

When the transfer of the ordinary data has been finished, the ordinary buffer 2 reports the completion of transfer to the scheduler 10 (step S9), which responsibly reports the completion of handover preparation to the handover controller 11 (step S10). Therefore, the handover controller 11 reports the completion of handover preparation to the radio channel station (step S11), so that the handover is going to be executed (step S12).

Thus, the scheduler 10 performs the retransmission on a priority or the top priority until a new transmission request (ACK signal) is returned from the terminal. As a result, for a handover object terminal, the retransmission is to be completed in a shorter time in comparison with a case where the priority order is not raised. It is to be noted that a new transmission request means that data transmission has been made to a terminal with a predetermined quality or more, or without errors. The retransmission control is finished at the time when the ACK signal is returned from the terminal.

Thus, by raising the priority order, the retransmission to handover object terminal can be made smoothly, making the retransmission buffer 3 empty in the earliest manner. Also, in the past, data stored in the retransmission buffer for the terminal were required to be transferred to the base station that is a handover destination, which is illuminated by the present invention.

It is to be noted that in the above embodiment, the scheduler may perform the handover control by itself. Also, a transfer controller for transferring data in the buffer may be provided. Furthermore, the transfer of data in the ordinary buffer and the handover are performed in this order for the sake of simplified description, however, the handover may be executed during the data transfer of the ordinary buffer.

Embodiment (2) (Preferentially transferring both of retransmission data and ordinary data)

Fig.3 shows an embodiment (2) of a radio base station according to the present invention. While this embodiment is the same as the embodiment (1) shown in Fig.1 with reference to the basic arrangement, the operation is different as shown in Fig.4. The operation of the base station in Fig.3 will now be described along Fig.4.

At first, steps S21-S25 shown in Fig.4 respectively correspond to steps S1-S5 shown in Fig.2, in which like the embodiment (1), retransmission processing is rapidly finished by raising the transmission priority to the handover object terminal.

At step S26, the transmission order not only for the retransmission buffer 3 but also ordinary data toward the handover object terminal stored in the ordinary buffer 2 is set on the top priority. It is to be noted that in this case a predetermined priority level or degree may be raised, instead of the top priority.

Then, it is determined whether or not the ordinary buffer 2 of the handover object terminal is empty (step S27). If it is not empty, the ordinary data in the ordinary buffer 2 is stored in the retransmission buffer 3 and transmitted through the modulator 4 and the transmitter 5 (step S28).

Since the result of the transmission of the ordinary data is returned from the terminal, it is monitored at the ACK/NACK extractor 8 through the receiver 6 and the demodulator 7 (step S29). When the output signal of the ACK/NACK extractor 8 indicates an ACK signal the process returns to step S27 while when it is a NACK signal indicating a presence of an error in the received packet, the scheduler 10 retransmits the transmission data stored in the retransmission buffer 3 (step S30). Then, steps S29 and S30 are repeated until an ACK signal is returned as to the data.

Returning to step S27, it is found that the ordinary buffer 2 of the handover object terminal becomes empty, a preparation finish is reported to the handover controller 11 in the same manner as step S10 in Fig.2 (step S31), a handover preparation finish is reported to the radio channel control station RNC in the same manner as step S11 in Fig.2 (step S32), and the handover is executed (step S33).

Thus, data transfer of ordinary data to a base station as a handover destination through a radio channel control station as well as its control become unnecessary. Furthermore, a signal line therefor being not required enables the circuit scale to be reduced. Also, in the absence of data transfer in a network between the radio channel control station and the base station, the network load can be lightened.

It is to be noted that as will be described later, a unified arrangement of the retransmission buffer 3 and the ordinary buffer 2 can be made possible.

Embodiment (3) (Blocking data inflow from upper side at handover time)

Fig.5 shows an embodiment (3) of a radio base station according to the present invention. This embodiment (3) is the same as the embodiments in Figs.1 and 3 in the basic arrangement, but the operation is different as shown in a flowchart in Fig.6. Hereinafter, the embodiment (3) in Fig.5 will be described along the flowchart shown in Fig.6.

At first, after having received a handover request, in the same manner as step S1 in Fig.2 or step S21 in Fig.4, in this embodiment, the scheduler 10 controls the inflow controller 1 to stop the inflow of data toward a handover object terminal from an upper side (step S42).

This enables an increase of the ordinary data in the ordinary buffer 2 to be stopped.

After this, steps S43-S53 are executed corresponding to steps S2-S12 in Fig.2, in which at step S42, an inflow of data toward the handover object terminal is stopped and then the retransmission for the handover object terminal is executed on the top priority, and the ordinary data stored in the ordinary buffer are transferred to the base station of handover destination for the execution of handover.

Thus, since the data amount in the ordinary buffer 2 is not increased, the data transferring time or the time up to the transfer completion can be shortened, enabling the ordinary buffer to be surely empty. Furthermore, between the radio channel control station and the radio base station, it becomes possible to lighten the network load because unnecessary data transfer is eliminated.

Embodiment (4) (Simulating handover time by estimating propagation distance from propagation time)

Fig.7 shows an embodiment (4) of a radio base station according to the present invention. This embodiment is different in providing a transmission time calculator 12 and a terminal distance calculator 13 in relation to the base station shown in Fig.1, 3, or 5. Also, the buffer 30 is unified with the ordinary buffer 2 and the retransmission buffer 3 in the above embodiments.

Fig.8 shows an operation of the embedment (4) shown in Fig.7. Hereinafter, the operation of the base station BTS in Fig.7 will be described along Fig.8.

While in the above embodiments, it is supposed that the handover request is provided from an upper radio channel control station, this embodiment treats a case with no handover request. Namely, a case is supposed where the terminal exists in the vicinity of the border of cells so that the handover request for executing a handover is going to be generated in the near future with a high possibility. Starting the reception of a signal (step S61), the propagation time calculator 12 calculates the propagation time T of the signal (step S62). The calculation of this propagation time will be described as follows:

The base station BTS carries the packet P2 on HS-DSCH, and stores the transmission time received from the transmitter 5. Having received this packet P2, the terminal confirms whether or not this packet P2 includes an error, in which if it includes an error, a NACK signal that is a retransmission request is returned while if includes no error an ACK signal requesting a new transmission is carried on HS-DPPCH and returned to the base station.

The base station BTS having received the signal by HS-DPCCH extracts an ACK/NACK signal at the ACK/NACK extractor 8 through the receiver 6 and the modulator 7, and notifies the propagation time calculator 12 of the time extracted.

This enables the propagation time calculator 12 to calculate a reciprocated propagation time T by subtracting a predetermined time required for the system from a response time from the signal transmission time to the signal reception time.

On the basis of this result, a terminal distance calculator 13 calculates a distance L between the base station and the terminal (step S63).

The scheduler 10 compares the inputted distance L with a threshold value Lth corresponding to a predicted distance in which a handover can arise (step S64), and determines that the terminal is positioned in the vicinity of the border of cells if the distance L exceeds the threshold value Lth.

Thus, the processings of steps S65-S74 are executed by regarding the handover request as one provided from the radio channel control station. Namely, these steps S65-74 correspond to steps S3-S12 shown in Fig.2 or steps S43-S53 shown in Fig.6, in which the retransmission for the handover object terminal is performed on the top priority and then the ordinary data is transferred from the ordinary buffer via the network for the execution of the handover.

It is also to be noted that in this embodiment, like the embodiment (2) in Fig.3, not only the retransmission data but also the ordinary data can be transmitted preferentially. This applies to the following embodiments.

It is to be noted that while the comparison between the distance L and the threshold value is performed by the scheduler 10, it may be done inside the terminal distance calculator 13, or the propagation time calculator 12 and the terminal distance calculator 13 may be included in the scheduler 10.

Furthermore, according to 3GPP the above-noted transmission timing is prescribed including a delay due to the propagation, so that it can be easily made to calculate the propagation time.

From the above, a priority order can be determined regardless of the receiving status (C/I) of the terminal. Also, by raising the priority (order), the throughput or the transmission delay of the terminal can be improved, enabling services requiring a high-speed transmission to be offered.

Also, since a handover can be performed in the near future with a high possibility when the terminal exists in the vicinity of the border of cells, by raising the transmission priority order in the scheduler like the above embodiments before the handover request is provided from an upper side, and transmitting the ordinary data stored in the ordinary buffer, it becomes possible to perform a handover more quickly compared with a case where an actual handover request is received and executed.

Embodiment (5) (Simulating handover time by receiving-electric-field-strength)

Fig.9 shows an embodiment (5) of a radio base station according to the present invention. This embodiment is different in providing a terminal-receiving-electric-field-strength-information extractor 14 in relation to the base station BTS shown in Fig.1 and the like. Also, a buffer 30 is unified with the ordinary buffer 2 and the retransmission buffer 3 in the same manner as the above embodiment (4).

Fig.10 shows an arrangement of a terminal MS corresponding to the base station BTS shown in Fig.9, in which it is different from the prior art shown in Fig.28 that a receiving-electric-field-strength calculator 38 is provided.

Fig.11 is a flow chart showing an operation of the base station BTS shown in Fig.9. Hereinafter, the operation of the embodiment in Figs.9 and 10 will be described along the flowchart in Fig.11.

Starting the reception of a signal (step S81), the terminal-receiving-electric-field-strength-information extractor 14 shown in Fig.9 extracts receiving-electric-field-strength-information included in a demodulated signal obtained from the receiver 6 and the demodulator 7 (step S82). The receiving-electric-field-strength-information in this case may be reception power information.

This receiving-electric-field-strength-information is calculated as information of receiving-electric-field-strength E of a received signal, transmitted from the terminal, which the receiving-electric-field-strength calculator 38 receives through the modulator 34 and demodulator 35 in the terminal MS shown in Fig.10.

Then, the receiving-electric-field-strength-calculator 38 transmits the calculated receiving-electric-field-strength E to the base station BTS shown in Fig.9 through the modulator 32 and the transmitter 33, whereby the receiving-electric-field-strength E can be extracted at the terminal-receiving-electric-field-strength-information extractor 14 as above noted.

The receiving-electric-field-strength-information thus extracted is forwarded to the scheduler 10 to be compared with a threshold value Lth (step S83). As a result, if it is found that the receiving-electric-field-strength E is larger than the threshold value Eth (E>Eth), it is determined that the terminal MS exists in the vicinity of the border of cells so that the possibility of a handover is high (step S84).

Then, in the same way as the embodiment shown in Fig.8, the retransmission for the handover object terminal is set on the top priority (step S85), executing the following steps S66-S74 (step S86).

It is to be noted that upon calculating the receiving-electric-field-strength at the terminal, a moving average can be used to decrease fading effects. Also, by controlling a time interval for calculating the average, it becomes possible to lessen the fading effects by similarly.

Also, in this embodiment, the scheduler 10 may include the terminal-receiving-electric-field-strength-information extractor 14. Also, after the calculation of the receiving-electric-field-strength at the terminal, the terminal may determine the possibility of handover by itself, in which determining that there is a possibility, the terminal may return the result to the base station. In this case, the terminal receiving-electric-field-strength-information extractor 14 in the base station BTS may be a handover determination result extractor.

Embodiment (6) (Simulating handover time by estimating terminal distance from terminal position information)

While in the embodiment (5) shown in Figs. 9-11 a substantial handover request is detected by using the receiving-electric-field-strength, in the embodiment (6) of a radio base station according to the present invention shown in Fig.12, a distance between the terminal and the base station is calculated from the position information of the terminal, thereby substantially detecting the handover request.

To this end, in the embodiment (6) shown in Fig.12, instead of the terminal-receiving-electric-field-strength-information extractor 14 shown in Fig.9, a BS (base station)-position-information-memory 15, a terminal-position-information extractor 16 and a terminal distance calculator 17 are employed.

Fig.13 shows an arrangement of the terminal MS corresponding to the radio base station BTS of the embodiment (6) shown in Fig.12, in which for the receiving-electric-field-strength-calculator 38 shown in Fig.10, a GPS (Global Positioning System) portion 38 is substituted.

The operation of the embodiment (6) shown in Figs.12 and 13 will now be described along the flowchart in Fig.14.

At first, the terminal-position-information extractor 16 shown in Fig.12 extracts terminal-position-information based on a demodulated signal from the receiver 6 and the demodulator 7 (step S92). The terminal-position-information of this case is obtained such that the position information of the station itself is extracted at the GPS portion 38 as shown in Fig.13, is transmitted toward the base station through the modulator 32 and the transmitter 33, and is extracted by the terminal-position-information extractor 16.

The BS position information memory 15 has preliminarily stored therein the position information of itself. The terminal distance calculator 17 having inputted the BS-position-information stored in the BS-position-information memory 15 and terminal-position-information extracted by the terminal-position-information extractor 16 can calculate a distance L between the terminal-base station from the position information Pt1 of the terminal and the position-information Pt0 of the base station.

The scheduler 10 compares the inputted distance L with the threshold value Lth like the embodiment (4) shown in Figs.7 and 8 (step S94), in which if the distance L exceeds the threshold value Lth (L>Lth), steps S65-74 are executed like the embodiment (5) shown in Fig.11.

Namely, the scheduler 10 raises the priority order of data retransmission for the retransmission buffer 3, and transmits the data stored in the ordinary buffer 2.

Thus, it becomes possible to realize a handover at a high speed. It is to be noted that in view of the base station which does not move, a position measurement or direct input may be pre-stored in the position information memory.

Also, in this embodiment, the scheduler 10 may include the BS-position-information memory 15, the terminal-position-information-extractor 16 and the terminal distance calculator 17.

Embodiment (7) (Simulating handover time based on connected-BS-number)

While in the above embodiments, the detection of handover request is simulated by using a distance between BS-terminal or receiving-electric-field-strength, the number of base station connected will increase as the terminal approaches to the border of cells. Therefore, it is possible to detect a substantial handover request by such a connected-BS-number.

Here, site diversity used for detecting connected-BS-number will be briefly described.

Site diversity is a method for transmitting the same data toward a certain terminal from a plurality of base stations, in which as shown in Fig.15 a base station BTS1 has a different propagation route from a base station BTS2, so that a diversity gain arises in the terminal MS. Assuming that waves from the base stations BTS1 and BTS2 are in phase, the receiving-electric-field-strength is doubled by the combined DL A-DPCHs, so that the terminal has equivalently received a complex wave from the two base stations, providing the connected-BS-number at this time=2.

An embodiment (7) using such a site diversity is shown in Figs.16-18. Fig.16 shows an embodiment (7) of the base station BTS, in which a connected-BS-number-information extractor 18 is provided to recognize the above connected-BS-number. Correspondingly in an arrangement of the terminal MS shown in Fig.17, a field-strength calculator 37, a site diversity controller 39 and a connected-BS-number calculator 40 are provided.

Hereinafter the operation of the embodiment (7) will be described referring to the flowchart shown in Fig.18.

At first, in case the terminal MS is positioned in a relatively near place to the base station BTS1 or BTS2, a receiving-electric-field-strength E forwarded to the site diversity controller 39 from the receiving-electric-field-strength-calculator 37 in the terminal MS is high so that the site diversity controller 39 dose not perform the above site diversity. Therefore, the connected-BS-number-calculator 40 dose not calculate the connected-BS-number either. In case the terminal MS is positioned in the vicinity of the border of cells, the receiving-electric-field-strength E becomes low to the contrary so that a control with site diversity is performed.

When performing the site diversity, the site diversity controller 39 gives the complex wave signal of DL A-DPCH at this time to the connected-BS-number calculator 40, whereby a BS number N indicating the number of the current connection is detected at the connected-BS-number calculator 40 and transmitted to the base station through the modulator 32 and the transmitter 33.

At the base station BTS, the connected-BS-number information N thus transmitted from the terminal MS is extracted at the connected-BS-number-information extractor 18 (step S102).

Then, the scheduler having received the connected-BS-number-information compares the connected-BS-number N with the threshold value Nth (step S103), in which if the connected-BS-number N detected exceeds the threshold value Nth, it is determined that the terminal is positioned in the vicinity of the border of cells and steps S65-S74 are executed in the same manner as Fig.11, whereby the priority order of data retransmission in the scheduler 10 is raised and the transmission of the ordinary data stored in the ordinary buffer is performed to realize a high speed handover.

This connected-BS-number-information N may be notified to the terminal or base station from an upper side such as the radio channel control station.

Also, in this embodiment, the scheduler 10 may include the connected-BS-number-information extractor 18.

Embodiment (8) (Simulating handover time based on terminal moving direction)

In addition to a distance between BS-terminal, receiving-electric-field-strength, or connected-BS-number in the above embodiments, it is possible to detect a state where the terminal exists near the border of cells by detecting a moving direction of the terminal.

In an embodiment (8) of a radio base station according to the present invention as shown in Figs.19 and 20, it is different in substituting a terminal-moving-direction calculator 20 for the terminal distance calculator 17 in the embodiment (6) shown in Fig. 12.

Hereinafter, the operation of the base station shown in Fig.19 will be described along the flow chart shown in Fig.20. It is to be noted that the terminal of this case may adopt the arrangement shown in Fig.13.

At first, the terminal-position-information-extractor 16 shown in Fig.19 extracts terminal-position-information Pt1 transmitted from the terminal (steps S111 and 112). Then, the terminal-position-information Pt1 is stored in the terminal-position-information memory 19 (step S113).

Then, the terminal-position-information extractor 16 extracts the next terminal-position-information Pt2 (step S114), at which the terminal-moving-direction calculator 20 calculates a moving direction D of the terminal by inputting present terminal-position-information Pt2 extracted by the terminal-position-information extractor 16 and past terminal-position-information Pt1 having been stored in the memory 19 (step S115).

The scheduler 10 having inputted the terminal moving direction D calculated by the moving direction calculator 20 determines whether or not the moving direction D is toward the border of cells (step S116), whereby it can be determined from the moving direction D and the terminal-position-information Pt2 that the terminal is directing toward the cell border so that in such a determination, steps S65-S74 are executed like Fig. 11.

To the contrary, if it is found that the moving direction D is not directing toward the cell border, the present terminal-position-information Pt2 is stored in the terminal-position-information memory 19 as the past terminal-position-information Pt1 (step S117).

Thus, it is also possible to realize a high-speed handover.

Also, in this embodiment, the scheduler 10 may include the terminal-position-information extractor 16, the memory 19 and the terminal-moving-direction calculator 20.

Embodiment (9) (Simulating handover time based on moving direction of terminal)

While the above embodiment (8) calculates the moving direction of the terminal, this embodiment (9) of a radio base station according to present invention shown in Figs.21-23 performs the calculation of the moving direction at the terminal.

To this end, the base station BTS does not include the memory 19 and the terminal-moving-direction calculator 20 in the embodiment (8) shown in Fig. 19, but instead employs a terminal-moving-direction-information extractor 21. Correspondingly, in the terminal MS, a position information memory 41 and a moving direction calculator 42 are employed in addition to the embodiment of the terminal shown in Fig.13, that is a different point.

The operation of this embodiment (9) will now be described referring to the flow chart shown in Fig.23.

At first, in the terminal MS, position information Pt1 detected at the GPS portion 38 is once stored in the memory 41. By comparing the present position information and the past position information at the moving direction calculator 42, the moving direction D of the terminal MS is calculated and transmitted to the base station BTS together with the position information Pt1 through the modulator 32 and the transmitter 23.

In the base station BTS, terminal position information Pt1 is extracted at the terminal-position-information extractor 16 (step S122), thereby extracting terminal-moving-direction information D at the terminal-moving-direction-information extractor 21 (step S123).

As a result, in the same manner as step S116 in Fig.20, the scheduler 10 determines whether or not the moving direction D is directing toward the cell border (step S124), in which if the moving direction D is directing toward the cell border, steps S65-74 are executed similarly to Fig.11.

Thus, it is determined from the moving direction D and the terminal-position-information Pt1 that the terminal is directing toward the cell border, the priority order of data retransmission in the scheduler 10 is raised and the ordinary data stored in the ordinary buffer is transmitted, thereby realizing a high speed handover.

Also, in this embodiment, the scheduler 10 may include the terminal-position-information extractor 16 and the terminal-moving-direction-information extractor 21.

Embodiment (10) (Simulating handover time based on moving speed of terminal)

While the embodiments (8) and (9) make controls by using the moving direction of the terminal, a similar determination is made possible by using a moving speed of the terminal.

An embodiment (10), performing such a control, is shown in Figs.24 and 25.

Namely, the base station BTS shown in Fig.24, employs a terminal-moving-speed calculator 22, different from the embodiment (8) shown in Fig.19 employing the moving terminal direction calculator 20. The operation of this embodiment will now be described along the flow chart shown in Fig.25.

In the flow chart shown in Fig.25, steps S131-S134 respectively correspond to steps S111-S114 in the flow chart of the embodiment (8) shown in Fig.20, in which the terminal-moving-speed calculator 22 can calculate a moving speed V of the terminal by using the following equation by inputting two pieces of the terminal-position information PT1 and Pt2 respectively from the terminal position memory 19 and the terminal-position-information extractor 16 (step S135):

$$V=(Pt2-Pt1)/(T2-T1)$$

where T1 and T2 indicate times respectively added to the terminal-position-information detected at the terminal, to be transmitted.

As a result, if it is found that the calculated terminal speed V is larger than a threshold value Vth (step S136), steps S65-74 are executed similarly to Fig.11. Namely, if the moving speed V is high, the priority order of data retransmission in the scheduler 10 is raised and the ordinary data stored in the ordinary buffer is transmitted, thereby performing a high speed handover.

To the contrary, if it is found that the terminal moving speed V is equal to or lower than the threshold value Vth, new present terminal-position-information Pt2 is stored in the terminal-position-information memory 19 as past-terminal-position-information Pt1 (step S137).

Also, in this embodiment, the scheduler 10 may include the terminal-position-information extractor 16, the terminal-position-information memory 19 and the terminal-moving-speed calculator 22.

As in the above, according to the present invention, by raising a priority of a handover object terminal at the time of handover, it becomes unnecessary to transfer retransmission data stored in a retransmission buffer during retransmission to a base station of a handover destination. Also, it becomes unnecessary to transfer ordinary data stored in an ordinary buffer similarly. The transferring operation being not required makes it unnecessary for the corresponding control.

Also, when a handover is performed, an inflow of data for the terminal to the base station is stopped, thereby smoothly and surely executing the transfer operation within the buffer.

If it is found that the terminal is positioned near the cell border by using a propagation time, position information or connected-BS-number, by raising the order of data transmission to the terminal, it is facilitated that the throughput of the terminal is improved and the maximum delay time is maintained. Also, similar effects to the above are obtained upon handover.

## Claims

1. A radio base station comprising,
   a buffer holding communication data to a terminal,
   an extractor extracting a communication request signal from a received signal, and
   a scheduler controlling a transmission of the communication data based on an output signal of the extractor,
   the scheduler, upon detection of a handover request, controlling the buffer so as to preferentially perform data transmission by raising an order of the data transmission for a handover object terminal before executing the handover.

2. The radio base station as claimed in claim 1, wherein the communication data comprise retransmission data and the buffer comprises a retransmission buffer.

3. The radio base station as claimed in claim 1, wherein the communication data comprise ordinary data and the buffer comprises an ordinary buffer.

4. The radio base station as claimed in claim 2, further comprising an ordinary buffer; the scheduler, upon detection of the retransmission buffer being empty, preferentially transmitting ordinary data for the handover object terminal among from ordinary data held in the ordinary buffer.

5. The radio base station as claimed in any one of claims 1 to 4, further comprising an inflow controller; the scheduler, upon detection of the handover request, stopping an inflow of data for the handover object terminal from an upper side by controlling the inflow controller.

6. The radio base station as claimed in any one of claims 1 to 5, wherein the handover request is provided from a radio channel control station.

7. The radio base station as claimed in any one of claims 1 to 5, further comprising a propagation time calculator calculating a signal propagation time between the terminal and the base station from a data transmission time to a reception time of the output signal of the extractor, and a terminal distance calculator calculating a distance between the terminal and the base station from the propagation time; the scheduler detecting the handover request by comparing the distance with a threshold.

8. The radio base station as claimed in any one of claims 1 to 5, wherein the scheduler calculates a signal propagation time between the terminal and the base station from a data transmission time to a reception time of the output signal of the extractor, calculates a distance between the terminal and the base station from the propagation time, and detects the handover request by comparing the distance with a threshold.

9. The radio base station as claimed in any one of claims 1 to 5, further comprising a terminal receiving-electric-field-strength-information extractor extracting a receiving-electric-field-strength-information calculated from a received signal, and transmitted by the terminal; the scheduler detecting the handover request by comparing the receiving-electric-field-strength with a threshold.

10. The radio base station as claimed in any one of claims 1 to 5, wherein the scheduler extracts a receiving-electric-field-strength-information calculated from a reception signal and transmitted by the terminal, and detects the handover request by comparing the receiving-electric-field-strength with a threshold.

11. The radio base station as claimed in any one of claims 1 to 5, further comprising a terminal-position-information extractor extracting terminal-position-information measured and transmitted by the terminal, a position information memory storing position information of the station itself, and a terminal distance calculator calculating a distance between the terminal and the base station from the terminal-position-information and the position information of the station itself; the scheduler detecting the handover request by comparing the distance with a threshold.

12. The radio base station as claimed in any one of claims 1 to 5, wherein the scheduler extracts terminal-position-information measured and transmitted by the terminal, stores position information of the station itself, calculates a distance between the terminal and the base station from the terminal-position-information and the position information of the station itself, and detects the handover request by comparing the distance with a threshold.

13. The radio base station as claimed in any one of claims 1 to 5, further comprising a connected-base-station-number-information extractor extracting connected-base-station-number-information detected and transmitted by the terminal or provided from an upper layer; the scheduler detecting the handover request by comparing the connected-base-station-number with a threshold.

14. The radio base station as claimed in any one of claims 1 to 5, wherein the scheduler extracts connected-base-station-number-information detected and transmitted by the terminal or provided from an upper layer, and detects the handover request by comparing the connected-base-station-number with a threshold

15. The radio base station as claimed in any one of claims 1 to 5, further comprising a terminal-position-information extractor extracting terminal-position-information measured and transmitted by the terminal, a memory storing past one of the terminal-position-information extracted by the terminal-position-information extractor, and a moving direction calculator calculating a moving direction of the terminal from present one of the terminal-position-information extracted by the terminal-position-information extractor and the past terminal-position-information stored in the memory; the scheduler detecting the handover request from the moving direction.

16. The radio base station as claimed in any one of claims 1 to 5, wherein the scheduler extracts terminal-position-information measured and transmitted by the terminal, stores past one of the terminal-position-information extracted, calculates a moving direction of the terminal from present one of the terminal-position-information extracted and the past terminal-position-information , and detects the handover request from the moving direction.

17. The radio base station as claimed in any one of claims 1 to 5, further comprising a terminal-position-information extractor extracting terminal-position-information measured and transmitted by the terminal, and a terminal-moving-direction extractor extracting moving-direction-information of the terminal measured and transmitted by the terminal; the scheduler detecting the handover request from the terminal-position-information and the moving-direction-information.

18. The radio base station as claimed in any one of claims 1 to 5, wherein the scheduler extracts terminal-position-information measured and transmitted by the terminal, extracts moving-direction-information of the terminal measured and transmitted by the terminal, and detects the handover request from the terminal-position-information and the moving-direction-information.

19. The radio base station as claimed in any one of claims 1 to 5, further comprising a terminal-position-information extractor extracting terminal-position-information measured and transmitted by the terminal, a memory storing past one of the terminal-position-information extracted by the terminal-position-information extractor, and a moving speed calculator calculating a moving speed of the terminal from present one of the terminal-position-information extracted by the terminal-position-information extractor and the past terminal-position-information stored in the memory; the scheduler detecting the handover request by comparing the moving speed with a threshold.

20. The radio base station as claimed in any one of claims 1 to 5, wherein the scheduler extracts terminal-position-information measured and transmitted by the terminal, stores past one of the terminal-position-information extracted, calculates a moving speed of the terminal from present one of the terminal-position-information extracted and the past terminal-position-information, and detects the handover request by comparing the moving speed with a threshold.

21. A mobile communication system comprising,
    a terminal calculating receiving-electric-field-strength-information from a reception signal to be transmitted, and
    the radio base station as claimed in any one of claims 1 to 20,
    the radio base station extracting the receiving-electric-field-strength-information, and detecting the handover request by comparing the receiving-electric-field-strength with a threshold.

22. A mobile communication system comprising,
    a terminal measuring and transmitting terminal-position-information, and
    the radio base station as claimed in any one of claims 1 to 20,

the radio base station extracting the terminal-position-information, storing position information of the station itself, calculating a distance between the terminal and the base station from the terminal-position-information and the position information of the station itself, and detects the handover request by comparing the distance with a threshold.

**23.** A mobile communication system comprising,

a terminal detecting and transmitting connected-base-station-number-information, and

the radio base station as claimed in any one of claims 1 to 20,

the radio base station extracting the connected-base-station-number-information, and detecting the handover request by comparing the connected-base-station-number with a threshold.

**24.** The mobile communication system as claimed in claim 23, wherein the terminal detects the connected-base-station-number by site diversity when the receiving-electric-field-strength is low.

**25.** A mobile communication system comprising,

a terminal calculating and transmitting terminal-position-information, and

the radio base station as claimed in any one of claims 1 to 20,

the radio base station extracting the terminal-position-information, storing past one of the terminal-position-information extracted, calculating a moving direction of the terminal from present one of the terminal-position-information extracted and the past terminal-position-information, and detecting the handover request from the moving direction.

**26.** A mobile communication system comprising,

a terminal calculating and transmitting terminal-position-information and moving-direction-information of the terminal, and

the radio base station as claimed in any one of claims 1 to 20,

the radio base station extracting the terminal-position-information, and the moving-direction-information and detecting the handover request from the terminal-position-information and the moving-direction-information.

**27.** A mobile communication system comprising,

a terminal measuring and transmitting terminal-position-information, and

the radio base station as claimed in any one of claims 1 to 20,

the radio base station extracting the terminal-position-information, storing past one of the terminal-position-information extracted, calculating a moving speed of the terminal from present one of the terminal-position-information extracted and the past terminal-position-information, and detecting the handover request by comparing the moving speed with a threshold.

**28.** A radio base station comprising means preferentially processing retransmission data for a handover object terminal.

FIG.1

BTS BASE STATION

UPPER DATA → | INFLOW CONTROLLER |(1)→| ORDINARY BUFFER |(2)→| RETRANS-MISSION BUFFER |(3)→ S5 →| MODULATOR |(4)→| TRANSMITTER |(5)

S8  S7

S9

S3

DATA IN BUFFER ◄ ----

S2 →| SCHEDULER |(10)

S10

HANDOVER REQUEST ---- S1 →| HANDOVER CONTROLLER |(11)

HANDOVER READY ◄ ---- S11

C/I →| TERMINAL-RECEIVING-STATE-INFORMATION EXTRACTOR |(9)

S6  S4 →| ACK/NACK EXTRACTOR |(8)

| DEMODULATOR |(7) ◄ | RECEIVER |(6)

EP 1 549 097 A1

# FIG.2

S1 — RECEIVE HANDOVER REQUEST

S2 — TRANSFER TO SCHEDULER

S3 — SET RETRANSMISSION OF HANDOVER OBJECT TERMINAL ON TOP PRIORITY

S4 — ACK/NACK? — ACK

NACK

S5 — RETRANSMIT

S6 — CONFIRM ACK (CONFIRM RETRANSMISSION FINISH TO TERMINAL)

S7 — TRANSFER REQUEST TO ORDINARY BUFFER

S8 — TRANSFER TO RNC

S9 — REPORT TRANSFER FINISH TO SCHEDULER

S10 — REPORT PREPARATION FINISH TO HANDOVER CONTROLLER

S11 — REPORT HANDOVER PREPARATION FINISH TO RNC

S12 — HANDOVER

## FIG.3

BTS BASE STATION

- 1 INFLOW CONTROLLER
- 2 ORDINARY BUFFER
- 3 RETRANS-MISSION BUFFER
- 4 MODULATOR
- 5 TRANSMITTER
- 6 RECEIVER
- 7 DEMODULATOR
- 8 ACK/NACK EXTRACTOR
- 9 TERMINAL-RECEIVING-STATE-INFORMATION EXTRACTOR
- 10 SCHEDULER
- 11 HANDOVER CONTROLLER

UPPER DATA
HANDOVER REQUEST
HANDOVER READY

S21, S22, S23, S24, S25, S26, S27, S28, S29, S30, S31, S32, C/I

FIG.4

S21 — RECEIVE HANDOVER REQUEST

S22 — TRANSFER TO SCHEDULER

S23 — SET RETRANSMISSION OF HANDOVER OBJECT TERMINAL ON TOP PRIORITY

S24 — ACK/NACK? — ACK

NACK

S25 — RETRANSMIT

S26 — SET ORDINARY TRANSMISSION OF HANDOVER OBJECT TERMINAL ON TOP PRIORITY

S27 — IS ORDINARY BUFFER OF HANDOVER OBJECT TERMINAL EMPTY? — YES

NO

S28 — TRANSMIT TO TERMINAL

ACK

S29 — ACK/NACK?

NACK

S30 — RETRANSMISSION

S31 — REPORT PREPARATION FINISH TO HANDOVER CONTROLLER

S32 — REPORT HANDOVER PREPARATION FINISH TO RNC

S33 — HANDOVER

FIG.5

EP 1 549 097 A1

# FIG.6

S41 — RECEIVE HANDOVER REQUEST

S42 — STOP INFLOW OF DATA FOR HANDOVER OBJECT TERMINAL IN INFLOW CONTROLLER

S43 — TRANSFER TO SCHEDULER

S44 — SET RETRANSMISSION OF HANDOVER OBJECT TERMINAL ON TOP PRIORITY

S45 — ACK/NACK?  → ACK

NACK

S46 — RETRANSMIT

S47 — CONFIRM ACK (CONFIRM RETRANSMISSION FINISH TO TERMINAL)

S48 — TRANSFER REQUEST TO ORDINARY BUFFER

S49 — TRANSFER TO RNC

S50 — REPORT TRANSFER FINISH TO SCHEDULER

S51 — REPORT PREPARATION FINISH TO HANDOVER CONTROLLER

S52 — REPORT HANDOVER PREPARATION FINISH TO RNC

S53 — HANDOVER

22

## FIG.7

BTS BASE STATION

UPPER DATA → INFLOW CONTROLLER (1) → BUFFER (30) → S67 → MODULATOR (4) → TRANSMITTER (5)

S70, S65, S71

Lth → SCHEDULER (10) ← L ← TERMINAL DISTANCE CALCULATOR (13) ← T ← PROPAGATION TIME CALCULATOR (12)

C/I, S68, S66

TERMINAL-RECEIVING-STATE-INFORMATION EXTRACTOR (9)

ACK/NACK EXTRACTOR (8)

DEMODULATOR (7) ← RECEIVER (6)

# FIG.8

S61 — START RECEPTION

S62 — CALCULATE PROPAGATION TIME T

S63 — CALCULATE PROPAGATION DISTANCE L

S64 — L > Lth?

NO

YES

S65 — SET RETRANSMISSION OF HANDOVER OBJECT TERMINAL ON TOP PRIORITY

S66 — ACK/NACK?

ACK

NACK

S67 — RETRANSMIT

S68 — CONFIRM ACK (CONFIRM RETRANSMISSION FINISH TO TERMINAL)

S69 — REQUEST TRANSFER TO BUFFER

S70 — TRANSFER TO RNC

S71 — REPORT TRANSFER FINISH TO SCHEDULER

S72 — REPORT PREPARATION FINISH TO HANDOVER CONTROLLER

S73 — REPORT HANDOVER PREPARATION FINISH TO RNC

S74 — HANDOVER

# FIG.9

BTS BASE STATION

UPPER DATA → INFLOW CONTROLLER (1) → BUFFER (30) → MODULATOR (4) → TRANSMITTER (5)

Eth → SCHEDULER (10)

E

TERMINAL-RECEIVING-ELECTRIC-FIELD-STRENGTH-INFORMATION EXTRACTOR (14)

ACK/NACK EXTRACTOR (8)

DEMODULATOR (7) ← RECEIVER (6)

## FIG.10

MS TERMINAL

33 TRANSMITTER ← 32 MODULATOR ←

E

37 RECEIVING-ELECTRIC-FIELD-STRENGTH CALCULATOR

36 RETRANSMISSION CONTROLLER

34 RECEIVER → 35 DEMODULATOR →

## FIG.11

S81 START RECEPTION

S82 EXTRACT RECEIVING-ELECTRIC-FIELD-STRENGTH-INFORMATION E

S83 E > Eth? → NO

YES

EXECUTE S65～S74

## FIG.12

BTS BASE STATION

UPPER DATA → INFLOW CONTROLLER (1) → BUFFER (30) → MODULATOR (4) → TRANSMITTER (5)

TERMINAL DISTANCE CALCULATOR (17) — L → SCHEDULER (10) ← Lth

BS-POSITION-INFORMATION MEMORY (15) — Pt0

TERMINAL-POSITION-INFORMATION EXTRACTOR (16) — Pt1

ACK/NACK EXTRACTOR (8)

DEMODULATOR (7) ← RECEIVER (6)

EP 1 549 097 A1

## FIG.13

```
                                    MS TERMINAL
                          38
            ┌──────────┐
            │   GPS    │   POSITION INFORMATION  Pt1
            │ PORTION  │
            └──────────┘

          33              32
    ┌─────────────┐  ┌───────────┐
    │ TRANSMITTER │◄─│ MODULATOR │◄───────────┐
    └─────────────┘  └───────────┘            │
                                        36    │
                                 ┌──────────────────┐
                                 │  RETRANSMISSION   │
                                 │   CONTROLLER      │
          34              35     └──────────────────┘
    ┌─────────────┐  ┌───────────────┐        │
    │  RECEIVER   │─►│  DEMODULATOR  │         │
    └─────────────┘  └───────────────┘
```

## FIG.14

```
  S91 ───┌────────────────────────┐
         │    START RECEPTION     │
         └────────────────────────┘
                     │
                     ▼◄─────────────────────┐
  S92 ───┌────────────────────────┐         │
         │    EXTRACT TERMINAL     │         │
         │ POSITION INFORMATION Pt1│         │
         └────────────────────────┘         │
                     │                       │
  S93 ───┌────────────────────────┐         │
         │   CALCULATE TERMINAL    │         │
         │      DISTANCE L         │         │
         └────────────────────────┘         │
                     │                       │
  S94 ──┐            ▼                       │
        ╱◇╲                         NO       │
       ╱    ╲                                │
      ◇  L > Lth?  ◇──────────────────────────
       ╲    ╱
        ╲◇╱
          │ YES
          ▼
    ┌────────────────────┐
    │  EXECUTE S65～S74   │
    └────────────────────┘
```

## FIG.15

BTS 1

BTS 2

DL A-DPCH
DL HS-DSCH

DL A-DPCH

MS

# FIG.16

BTS BASE STATION

```
                    1                  30                 4                5
UPPER DATA ──────▶ INFLOW  ────────▶  BUFFER  ──────▶ MODULATOR ──────▶ RADIO
              ┌──│ CONTROLLER │               │                         PORTION
              ◀─▶│            │               │
                                              │
                                         10   │
                                         SCHEDULER ◀─── Nth
                          ┌──────────────▶         ◀──
                          │                       N│
                    8     │                   18   │
                  ACK/NACK             CONNECTED-
                  EXTRACTOR            BS-NUMBER-
                                       INFORMATION
                                       EXTRACTOR
                                                        7              6
              ◀─────────────────────────── DEMODULATOR ◀────── RADIO
                                                                PORTION
```

EP 1 549 097 A1

FIG.17

MS TERMINAL

33
TRANSMITTER

32
MODULATOR

N

40
CONNECTED BS NUMBER CALCULATOR

39
SITE DIVERSITY CONTROLLER

36
RETRANSMISSION CONTROLLER

37
RECEIVING-ELECTRIC-FIELD-STRENGTH CALCULATOR

34
RECEIVER

35
DEMODULATOR

FIG.18

S101 — START RECEPTION

S102 — EXTRACT CONNECTED-BS-NUMBER-INFORMATION N

S103 — $N > N_{th}$?

NO

YES

EXECUTE S65~S74

FIG.19

BTS BASE STATION

UPPER DATA →

| INFLOW CONTROLLER | 1 |

| BUFFER | 30 |

| MODULATOR | 4 |

| TRANSMITTER | 5 |

Pt1 →

| TERMINAL-MOVING-DIRECTION CALCULATOR | 20 |

D →

| SCHEDULER | 10 |

| TERMINAL-POSITION-INFORMATION MEMORY | 19 |

Pt1
Pt2

Pt2

| TERMINAL-POSITION-INFORMATION EXTRACTOR | 16 |

| ACK/NACK EXTRACTOR | 8 |

| DEMODULATOR | 7 |

| RECEIVER | 6 |

EP 1 549 097 A1

FIG.20

S111 — START RECEPTION

S112 — EXTRACT TERMINAL-POSITION-INFORMATION Pt1

S113 — STORE Pt1 IN TERMINAL-POSITION-INFORMATION MEMORY

S114 — EXTRACT TERMINAL-POSITION-INFORMATION Pt2

S115 — CALCULATE TERMINAL-MOVING-DIRECTION D

S116 — IS MOVING DIRECTION FOR CELL BORDER?

S117 — STORE Pt2 AS Pt1 IN TERMINAL-POSITION-INFORMATION MEMORY

NO

YES

EXECUTE S65~S74

## FIG.21

BTS BASE STATION

UPPER DATA → INFLOW CONTROLLER (1) → BUFFER (30) → MODULATOR (4) → TRANSMITTER (5)

SCHEDULER (10)

D

Pt1

TERMINAL-MOVING-DIRECTION-INFORMATION EXTRACTOR (21)

TERMINAL-POSITION-INFORMATION EXTRACTOR (16)

ACK/NACK EXTRACTOR (8)

DEMODULATOR (7) ← RECEIVER (6)

## FIG.22

MS TERMINAL

- 41 POSITION INFORMATION MEMORY
- 42 MOVING DIRECTION CALCULATOR
- 38 GPS PORTION
- POSITION INFORMATION Pt1
- D
- 33 TRANSMITTER
- 32 MODULATOR
- 36 RETRANSMIT CONTROLLER
- 34 RECEIVER
- 35 DEMODULATOR

## FIG.23

S121 — START RECEPTION

S122 — EXTRACT TERMINAL-POSITION-INFORMATION Pt1

S123 — EXTRACT TERMINAL-MOVING-DIRECTION-INFORMATION D

S124 — IS MOVING DIRECTION FOR CELL BORDER?  NO

YES

EXECUTE S65～S74

# FIG.24

BTS BASE STATION

UPPER DATA

INFLOW CONTROLLER 1

BUFFER 30

MODULATOR 4

TRANSMITTER 5

Vth

TERMINAL-MOVING-SPEED CALCULATOR 22

Pt1

V

SCHEDULER 10

TERMINAL-POSITION-INFORMATION MEMORY 19

Pt1

Pt2

TERMINAL-POSITION-INFORMATION EXTRACTOR 16

Pt2

ACK/NACK EXTRACTOR 8

DEMODULATOR 7

RECEIVER 6

EP 1 549 097 A1

# FIG.25

S131 — START RECEPTION

S132 — EXTRACT TERMINAL-POSITION-INFORMATION Pt1

S133 — STORE Pt1 IN TERMINAL-POSITION-INFORMATION MEMORY

S134 — EXTRACT TERMINAL-POSITION-INFORMATION Pt2

S135 — CALCULATE TERMINAL SPEED V

S137 — STORE Pt2 AS Pt1 IN TERMINAL-POSITION-INFORMATION MEMORY

S136 — $V > V_{th}$?

NO

YES

EXECUTE S65~S74

## FIG.26

(1) DL HS-DSCH
(2) DL HS-SCCH
(4) DL A-DPCH

BTS
BASE STATION

(3) UL HS-DPCCH
(5) UL A-DPCH

TERMINAL MS

## FIG.27

BASE STATION
BTS

TERMINAL
MS

TRANSMIT PACKET P1①

(DL HS-DSCH)

②

CONFIRM RECEPTION
QUALITY ETC

REQUEST RETRANSMISSION
(NACK)③

RETRANSMIT PACKET P1④

(DL HS-DSCH)

FIG.28

FIG.29

EP 1 549 097 A1

FIG.30

BTS        MS

CL

FIG.31

RADIO CHANNEL CONTROL
STATION (RNC)        RNC

MS

BTS 1        BTS 2

CL 1        CL 2

# FIG.32

S141 — RECEIVE HANDOVER REQUEST(FROM RNC)

↓

S142 — TRANSFER TO SCHEDULER

↓

S143 — REQUEST TRANSFER TO RETRANSMISSION BUFFER OF HANDOVER OBJECT TERMINAL

↓

S144 — TRANSFER TO RNC

↓

S145 — REPORT TRANSFER FINISH TO SCHEDULER

↓

S146 — REQUEST TRANSFER TO ORDINARY BUFFER OF HANDOVER OBJECT TERMINAL

↓

S147 — TRANSFER TO RNC

↓

S148 — REPORT TRANSFER FINISH TO SCHEDULER

↓

S149 — REPORT PREPARATION FINISH TO HANDOVER CONTROLLER

↓

S150 — REPORT HANDOVER PREPARATION FINISH TO RNC

↓

S151 — HANDOVER

**INTERNATIONAL SEARCH REPORT**

| International application No. |
| --- |
| PCT/JP03/01710 |

| A. CLASSIFICATION OF SUBJECT MATTER |
| --- |
| Int.Cl⁷ H04Q7/38 |

According to International Patent Classification (IPC) or to both national classification and IPC

| B. FIELDS SEARCHED |
| --- |

Minimum documentation searched (classification system followed by classification symbols)
Int.Cl⁷ H04B7/24-7/26, H04Q7/00-7/38

Documentation searched other than minimum documentation to the extent that such documents are included in the fields searched

| | | | |
| --- | --- | --- | --- |
| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| A | JP 2001-36954 A (Lucent Technologies Inc.), 09 February, 2001 (09.02.01), Full text; Figs. 1 to 7 & AU 200039346 A & BR 200003572 A & CA 2310486 A1 & CN 1277523 A & EP 1059823 A1 | 1-28 |
| A | JP 2002-501695 A (Nokia Networks Oy.), 15 January, 2002 (15.01.02), Full text; Figs. 1, 2 & AU 9868356 A & CN 1252918 A & EP 0976269 A2 & FI 9701585 A & WO 98/47302 A2 & ZA 9803090 A | 1-28 |

☒ Further documents are listed in the continuation of Box C.  ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 14 May, 2003 (14.05.03) | 27 May, 2003 (27.05.03) |
| Name and mailing address of the ISA/ Japanese Patent Office | Authorized officer |
| Facsimile No. | Telephone No. |

Form PCT/ISA/210 (second sheet) (July 1998)

**INTERNATIONAL SEARCH REPORT**

| International application No. |
| --- |
| PCT/JP03/01710 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2002-77982 A (Matsushita Electric Industrial Co., Ltd.), 15 March, 2002 (15.03.02), Full text; Figs. 1 to 5 (Family: none) | 1-28 |